(19) Europäisches Patentamt / European Patent Office / Office européen des brevets

(11) **EP 3 545 633 B1**

(12) **EUROPEAN PATENT SPECIFICATION**

(45) Date of publication and mention of the grant of the patent:
**26.02.2025 Bulletin 2025/09**

(21) Application number: **16805886.5**

(22) Date of filing: **22.11.2016**

(51) International Patent Classification (IPC):
**H04J 3/06** $^{(2006.01)}$

(52) Cooperative Patent Classification (CPC):
**H04J 3/0667**

(86) International application number:
**PCT/GB2016/053631**

(87) International publication number:
**WO 2018/096304 (31.05.2018 Gazette 2018/22)**

(54) **METHODS AND SYSTEMS FOR SYNCHRONIZATION USING DELAY ASYMMETRY**

VERFAHREN UND SYSTEME ZUR SYNCHRONISIERUNG MIT VERZÖGERUNGSASYMMETRIE

PROCÉDÉS ET SYSTÈMES DE SYNCHRONISATION UTILISANT UNE ASYMÉTRIE DE RETARD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.10.2019 Bulletin 2019/40**

(73) Proprietors:
- **Khalifa University of Science and Technology**
  Abu Dhabi (AE)
- **British Telecommunications Public Limited Company**
  London EC1A 7AJ (GB)
- **Emirates Telecommunications Group Company PJSC**
  P.O. Box 3838 Abu-Dhabi (AE)

(72) Inventors:
- **CHALOUPKA, Zdenek**
  53705, Chrudim IV (CZ)
- **BOYD, Ivan**
  Abu Dhabi (AE)

(74) Representative: **J A Kemp LLP**
**80 Turnmill Street**
**London EC1M 5QU (GB)**

(56) References cited:
**US-A1- 2015 092 794**

- **CHALOUPKA ZDENEK ET AL: "Clock Synchronization Over Communication Paths With Queue-Induced Delay Asymmetries", IEEE COMMUNICATIONS LETTERS, IEEE SERVICE CENTER, PISCATAWAY, NJ, US, vol. 18, no. 9, 1 September 2014 (2014-09-01), pages 1551 - 1554, XP011558412, ISSN: 1089-7798, [retrieved on 20140908], DOI: 10.1109/LCOMM.2014.2341604**
- **LEVESQUE MARTIN ET AL: "Improving the PTP synchronization accuracy under asymmetric delay conditions", 2015 IEEE INTERNATIONAL SYMPOSIUM ON PRECISION CLOCK SYNCHRONIZATION FOR MEASUREMENT, CONTROL, AND COMMUNICATION (ISPCS), IEEE, 11 October 2015 (2015-10-11), pages 88 - 93, XP032808949, DOI: 10.1109/ISPCS.2015.7324689**

**Description**

Field of the Invention

The present invention relates to methods and systems for synchronization taking into account delay asymmetry. It is particularly, but not exclusively, related to methods and systems which make use of the delay asymmetry to improve the accuracy of the estimation algorithm used to estimate the phase offset in a synchronization algorithm (for example under IEEE 1588 PTP).

Background of the Invention

Timing synchronization using a protocol such as IEEE 1588 PTP and a well-designed slave clock recovery mechanism can provide time synchronization in the sub-microsecond level and lower. Time synchronization requires an accurate measurement of the communication path delay between the time server (master) and the client (slave) in order to compute the time offset between them.

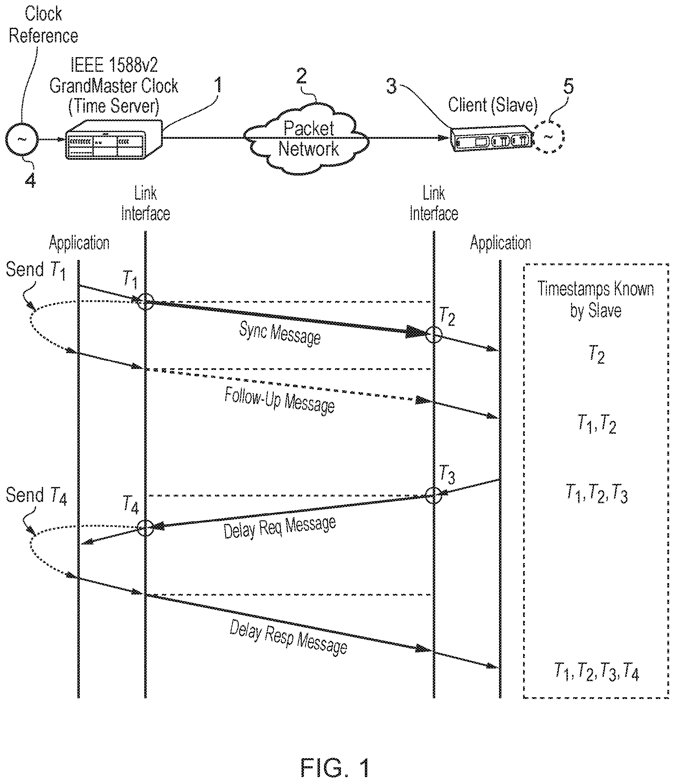

The PTP message exchange process (i.e., the PTP Delay Request/Delay Response flow) between a master and a slave is illustrated in Figure 1 and described below.

IEEE 1588 PTP allows for two different types of timestamping methods, either one-step or two-step. One-step clocks update time information within event messages (Sync and Delay_Req) on-the-fly, while two-step clocks convey the precise timestamps of packets in general messages (Follow_Up and Delay_Resp). A Sync message is transmitted by a master 1 to its slaves 3 and either contains the exact time of its transmission or is followed by a Follow_Up message containing this time. In a two-step ordinary or boundary clock, the Follow_Up message communicates the value of the departure timestamp for a particular Sync message.

Figure 1 illustrates the basic pattern of synchronization message exchanges for the two-step clocks. The master 1 sends a Sync message to the slave 3 over the packet network 2 and notes the time $T_1$ at which it was sent. The slave receives the Sync message and notes the time of reception $T_2$. The master 1 conveys to the slave 3 the timestamp $T_1$ by one of two ways: 1) Embedding the timestamp $T_1$ in the Sync message. This requires some sort of hardware processing (i.e., hardware timestamping) for highest accuracy and precision. 2) Embedding the timestamp $T_1$ a Follow_Up message which is the sent to the slave (as shown in Figure 1). Next, the slave 3 sends a Delay_Req message to the master 1 and notes the time $T_3$ at which it was sent. The master receives the Delay_Req message and notes the time of reception $T_4$. The master 1 conveys to the slave 3 the timestamp $T_4$ by embedding it in a Delay_Resp message.

At the end of this PTP message exchange, the slave 3 possesses all four timestamps $\{T_1, T_2, T_3, T_4\}$. These timestamps may be used to compute the offset of the slave's clock 5 with respect to the master clock 4 and the mean propagation time of messages between the two clocks. The computation of offset and propagation time assumes that the master-to-slave and slave-to-master propagation times are equal, i.e. that there is a symmetrical communication path. Clock frequencies change over time, so periodic message exchanges are required. Because these clock variations change slowly, the period between message exchanges is typically on the order of milliseconds to seconds.

In most existing approaches, the path delay estimation is based on the important assumption that the time delay from master to slave is equal to that from slave to master. However, in reality, the communication paths are not perfectly symmetric, mainly due to dissimilar forward and reverse physical link delays and queuing delays. Even in cases where the physical link delays are known and properly compensated for during clock synchronization, queuing delays, which are variable, can still exist when timing messages go through the packet network and are queued for forwarding. In particular, the processing and buffering of packets in network devices (switches, routers, etc.) introduce variations in the time latency of packets traversing the packet network. This mainly happens when timing transfer is done in an end-to-end manner without any form of timing assistance from the network to help mitigate the effects of the variable queuing delays.

Variable queueing delays and any asymmetry in the forward and reverse queuing delays directly lead to increased errors in the phase offset estimation between a master and slave. US 9,112,628B describes a technique which enables the forward queueing delays to be approximately tracked sample-by-sample within a window but with an unknown fixed offset for the duration of the window. Similarly, the reverse queueing delays can be approximately tracked sample-by-sample but with a different unknown offset. In US 9,112,628B these forward and backward queue delay (and offset) approximations are used in an additional step after the Kalman filter estimation of phase offset to modify and improve the estimate. US 9,112,628B discusses how the error in the phase offset estimation error, which is caused by queueing delay asymmetry, can be used to produce a phase offset estimate which more accurately represents the true phase offset between master and slave. This delay asymmetry compensation process is applied after the Kalman filter estimation of the phase offset as illustrated by equation 4 and the subsequent discussion in that document. Equation 25 of that document also suggests that the measurement noise should be coloured by the difference between the change in the forward delay between consecutive samples and the change in the reverse delay between consecutive samples, i.e., by $\Delta q_f(n) - \Delta q_r(n)$.

US 9,184,861B uses the variance of the difference between the forward and reverse message packet delay variations ("PDVs") as the measurement noise term for the Kalman filter realisation. This measurement noise term is used directly by the Kalman filter estimation algorithm. The approach in US 9,184,861 B2 is to accept that there is noise introduced by the queueing delays and then try to represent this noise faithfully.

Chaloupka et al. in "Clock Synchronization Over Communication Paths With Queue-Induced Delay Asymmetries", IEEE Communications Letters, vol. 18, no. 9, pp. 1511-1554, 1 September 2014 discloses

US 2015/092794A discloses methods and devices for compensating for path asymmetry, particularly with reference to time and frequency synchronization. The methods have particular application where time and frequency synchronization over packet networks using, for example, the IEEE 1588 Precision Time Protocol (PTP) is being carried out. Typically communication path delays between a time server (master) and a client (slave) are estimated using the assumption that the forward delay on the path is the same as the reverse delay. As a result, differences between these delays (delay asymmetries) can cause errors in the estimation of the offset of the slave clock from that of the master.

An object of the present invention is to provide an improved way of accounting for the delay asymmetry when estimating the phase offset of a slave clock.

A further object of the present invention is to provide a way of maintaining the accuracy of estimations during periods of high load on one of the forward and reverse channels in a timing network.

Summary of the Invention

At their broadest, aspects of the present invention provide for methods and systems which estimate the phase offset of a slave clock by taking into account an estimated measure of the asymmetry in the transmission paths between the time server and the time client.

A first aspect of the present invention provides a method of estimating a phase offset of a local clock in a time client compared with a master clock in a time server, connected to the time client over a network, the method including the steps of: sending first timing messages in a forward direction from the time server to the time client and second timing messages in a reverse direction from the time client to the time server, and recording timestamps which are the times of sending and times of receipt of the timing messages; estimating, for each message in a window of predetermined length, the transmission delay experienced by the message; determining, from said estimates, a minimum estimated delay experienced by timing messages in the forward direction in that window, and a minimum estimated delay experienced by timing messages in the reverse direction in that window; determining, for each message in that window, the difference between the estimated transmission delay for that message and the minimum estimated delay for messages travelling in the same direction as that message; determining, from said differences, a queuing asymmetry measure for each exchange of first and second timing messages in that window; estimating the phase offset of the local clock at a time in said window using said timestamps and said queuing asymmetry measure as inputs to an estimation algorithm.

The network may be a packet network (using technologies such Ethernet, IP, MPLS, etc.).

The timing messages are preferably timing messages under the IEEE 1588 Precision Time Protocol (PTP).

By using a method according to the present aspect, the noise introduced by the queueing delays can be reduced by using the estimations of the queueing delays.

Thus the method according to this aspect may significantly reduce the errors in phase offset estimation which result from variable and asymmetrical queueing delays.

In particular, the method of the present aspect preferably uses a queuing asymmetry measure (preferably based on good estimations of the difference in the forward and reverse delays) directly in an estimation algorithm (such as a Kalman filter algorithm) as an integral part of the estimation process, rather than as a modifier to be applied after the operation of the estimation algorithm. This can lead to efficiencies in that the estimate algorithm is able to converge on a solution much faster and arrive at a more accurate solution in the time available.

In certain embodiments, the queuing asymmetry measure may be determined as: $Q(n) = [(\hat{q}_f(n) - \hat{q}_{fmin}) - (\hat{q}_r(n) - \hat{q}_{rmin})]$, wherein: $\hat{q}_f(n)$ is an estimate of the queuing delay experienced by the n-th first timing message; $\hat{q}_r(n)$ is an estimated of the queuing delay experienced by the n-th second timing message; $\hat{q}_{fmin}$ is the determined minimum value of $\hat{q}_f(n)$ in said window; and $\hat{q}_{rmin}$ is the determined minimum value of $\hat{q}_r(n)$ in said window.

This particular queuing asymmetry measure has been found to be particularly close to the true queuing asymmetry in the delay for a particular pair of timing messages, whilst being calculated from values which are readily determined from the message exchange and estimations obtained in the method of the present aspect.

In certain embodiments the step of determining the queuing asymmetry measure includes: determining, from said timestamps, a forward displacement factor which is the difference between the interval between the times of receipt of successive first timing messages by the client and the interval between the times of sending of said successive first messages by the server; determining, from said timestamps, a reverse displacement factor which is the difference between the interval between the times of receipt of successive second timing messages by the server and the interval between the times of sending of said successive second timing messages by the client; maintaining a running sum of said forward displacement factors over a predetermined time period; maintaining a running sum of reverse displacement factors over a predetermined time period; and calculating the queuing asymmetry measure from said sums.

In preferred embodiments, the estimation algorithm is a Kalman filer, which may, for example, use the measurement equation: $(T_1(n) - T_2(n)) + (T_4(n) - T_3(n)) + Q(n) = 2\theta_E(n) + v_n$, wherein: $T_1(n)$ is the timestamp recorded by the server on sending of an n-th first timing message from the server to the client; $T_2(n)$ is the time of receipt as recorded by the client on receipt of the n-th first timing message; $T_3(n)$ is the timestamp recorded by the client on sending of an n-th second timing message from the client to the server; $T_4(n)$ is the time of receipt as recorded by the server on receipt of the n-th second timing message; $Q(n)$ is the queuing asymmetry measure; $v_n$ is the measurement noise; and $\theta_E(n)$ is an estimate of the local clock offset.

By inputting the queuing asymmetry measure directly into the calculations of the Kalman filter, the Kalman filter may converge much more rapidly on its solution.

The method may further include determining the load conditions on the forward and reverse transmission paths. This may be of particular benefit in allowing stored values for minimum delays or minimum displacements from times when the load conditions are determined to be low to generate better estimates of minimum delays or minimum displacements when one of the transmission paths has high load conditions.

The load conditions on a particular path can cause significant bias and/or error in estimating minimum values and this can lead to errors or inefficiency in estimating phase offset. By storing minima during periods of low load conditions, these minima can be used later to estimate the "true" minima when a path is under high load and may be more accurate than the minimum determined from the timing messages sent under those conditions.

In particular embodiments, the method may further include the steps of: determining, from said timestamps, a forward displacement factor which is the difference between the interval between the times of receipt of successive first timing messages by the client and the interval between the times of sending of said successive first messages by the server; determining, from said timestamps, a reverse displacement factor which is the difference between the interval between the times of receipt of successive second timing messages by the server and the interval between the times of sending of said successive second timing messages by the client; maintaining a running sum of said forward displacement factors over a predetermined time period; maintaining a running sum of reverse displacement factors over a predetermined time period; determining a noise condition of the forward transmission path and a noise condition of the reverse transmission path over said predetermined time period; if it is determined that both the forward and reverse transmission paths have a low noise condition during said predetermined time period, determining a minimum of the sum of forward displacement factors and a minimum of the sum of reverse displacement factors over that period of time and storing the determined minima as reference minimum values; and if it is determined during a future time period that one of the forward or reverse transmission paths has a high noise condition, whilst the other path has a low noise condition, using said reference minimum values and the minimum of the sum of displacement factors on the path with a low noise condition to estimate a minimum value for the sum of displacement factors on the path with a high noise condition.

The step of determining a noise condition on a transmission path may involve: calculating, based on the timestamps, a variance of a queuing delay on that path; applying a first moving average having a first time constant to the variance; applying a second moving average having a second time constant greater than the first time constant to the variance; calculating a difference between the first and second moving averages; and comparing the calculated difference to a threshold to determine a noise condition on the path.

For example, the moving averages may be exponentially-weighted moving averages (EWMAs).

Using a pair of moving averages allows determination of whether the current noise conditions (as represented by the moving average with the shorter time constant) have changed from an earlier steady-state period (as represented by the moving average with the longer time constant).

The threshold can be set *a-priori* if the conditions of the detection environment are known in advance or the threshold can be determined experimentally during operation (or a combination of both may be employed).

An alternative way of determining the noise conditions is to use the error variance-covariance matrix from a Kalman filter which is used in said estimation algorithm. This matrix is normally referred to as $P$ and is a square matrix with the form

$$P = \begin{matrix} P_{11} & P_{12} \\ P_{21} & P_{22} \end{matrix}$$

where $P_{11}$ is the error variance of the phase offset, $P_{22}$ is the error variance of the skew (fractional frequency offset), and $P_{12}$ and $P_{21}$ represent the error covariance between the phase offset and the skew.

Thus in some embodiments of the invention, the determination of a noise condition on a transmission path involves: determining the error variance-covariance matrix

$$P = \begin{matrix} P_{11} & P_{12} \\ P_{21} & P_{22} \end{matrix}$$

from a Kalman filter which is used in said estimation algorithm,

where $P_{11}$ is the error variance of the phase offset, $P_{22}$ is the error variance of the skew (fractional frequency offset), and $P_{12}$ and $P_{21}$ represent the error covariance between the phase offset and the skew.

As the value $P_{22}$ depends on the oscillator's stability, its variance, i.e., the variance of the $P_{22}$ term itself, is extremely low (almost non-existent). $P_{22}$ changes significantly only due to the external noise (and the primary external noise input is typically caused by forward and/or backward traffic load changes).

When external noise changes occur (e.g. the traffic load changes), $P_{22}$ reflects this by converging to a new stable level of error variance. Due to the filtering properties of the Kalman filter, this new level is, again, very stable (i.e., there is almost no variance). However, the magnitude of the new level will be very distinct from the previous state, provided there was a significant enough change in the noise conditions. Therefore, $P_{22}$ can be employed as input provide reliable indications of changing load conditions.

The method of the present aspect may include any combination of some, all or none of the above described preferred and optional features.

The method of the above aspect is preferably implemented by a time client according to the second aspect of this invention or a networked time system according to the third aspect of this invention, as described below, but need not be.

Further aspects of the present invention include computer programs for running on computer systems which carry out the method of the above aspect, including some, all or none of the preferred and optional features of that aspect.

A second aspect of the present invention provides a time client having a local clock and a processor, and connected over a network to a time server having a master clock, wherein the time client is arranged to: receive first timing messages sent in a forward direction from the time server to the time client; and send second timing messages in a reverse direction from the time client to the time server, record timestamps which are the times of sending and times of receipt of the timing messages by the time client; and receive timestamps which are the times of sending and the times of receipt of the timing messages by the time server, wherein the processor is arranged to: estimate, for each message in a window of predetermined length, the transmission delay experienced by the message; determine, from said estimates, a minimum estimated delay experienced by timing messages in the forward direction in that window, and a minimum estimated delay experienced by timing messages in the reverse direction in that window; determine, for each message in that window, the difference between the estimated transmission delay for that message and the minimum estimated delay for messages travelling in the same direction as that message; determine, from said differences, a queuing asymmetry measure for each exchange of first and second timing messages in that window; estimate the phase offset of the local clock at a time in said window using said timestamps and said queuing asymmetry measure as inputs to an estimation algorithm.

The network may be a packet network (using technologies such Ethernet, IP, MPLS, etc.).

The timing messages are preferably timing messages under the IEEE 1588 Precision Time Protocol (PTP).

In the time client according to the present aspect, the noise introduced by the queueing delays and the corresponding effects on offset estimation can be reduced by using the estimations of the queueing delays.

Thus the time client of the present aspect may significantly reduce the errors in phase offset estimation which result from variable and asymmetrical queueing delays.

In particular, the processor of the time client of the present aspect preferably uses a queuing asymmetry measure (preferably based on good estimations of the difference in the forward and reverse delays) directly in an estimation algorithm (such as a Kalman filter algorithm) as an integral part of the estimation process, rather than as a modifier to be applied after the operation of the estimation algorithm. This can lead to efficiencies in that the estimate algorithm is able to converge on a solution much faster and arrive at a more accurate solution in the time available.

In certain embodiments, the processor determines the queuing asymmetry measure as: $Q(n) = [(q_f(n) - \hat{q}_{fmin}) - (\hat{q}_r(n) - \hat{q}_{rmin})]$, wherein: $\hat{q}_f(n)$ is an estimate of the queuing delay experienced by the n-th first timing message; $\hat{q}_r(n)$ is an estimated of the queuing delay experienced by the n-th second timing message; $\hat{q}_{fmin}$ is the determined minimum value of $\hat{q}_f(n)$ in said window; and $\hat{q}_{rmin}$ is the determined minimum value of $\hat{q}_r(n)$ in said window.

This particular queuing asymmetry measure has been found to be particularly close to the true asymmetry in the delay for a particular pair of timing messages, whilst being calculated from values which are readily determined from the message exchange and estimations obtained in the method of the present aspect.

In certain embodiments the processor is arranged to determine the queuing asymmetry measure by: determining, from said timestamps, a forward displacement factor which is the difference between the interval between the times of receipt of successive first timing messages by the client and the interval between the times of sending of said successive first messages by the server; determining, from said timestamps, a reverse displacement factor which is the difference between the interval between the times of receipt of successive second timing messages by the server and the interval between the times of sending of said successive second timing messages by the client; maintaining a running sum of said forward displacement factors over a predetermined time period; maintaining a running sum of reverse displacement factors over a predetermined time period; and calculating the queuing asymmetry measure from said sums.

In preferred embodiments, the estimation algorithm is a Kalman filer, which may, for example, use the measurement equation: $(T_1(n) - T_2(n)) + (T_4(n) - T_3(n)) + Q(n) = 2\theta_E(n) + v_n$, wherein: $T_1(n)$ is the timestamp recorded by the server on sending of an n-th first timing message from the server to the client; $T_2(n)$ is the time of receipt as recorded by the client on receipt of the n-th first timing message; $T_3(n)$ is the timestamp recorded by the client on sending of an n-th second timing message from the client to the server; $T_4(n)$ is the time of receipt as recorded by the server on receipt of the n-th second timing message; $Q(n)$ is the queuing asymmetry measure; $v_n$ is the measurement noise; and $\theta_E(n)$ is an estimate of the local clock offset.

By inputting the queuing asymmetry measure directly into the calculations of the Kalman filter, the Kalman filter may converge much more rapidly on its solution.

The processor may be further arranged to determine the load conditions on the forward and reverse transmission paths. This may be of particular benefit in allowing stored values for minimum delays or minimum displacements from times when the load conditions are determined to be low to generate better estimates of minimum delays or minimum displacements when one of the transmission paths has high load conditions.

The load conditions on a particular path can cause significant bias and/or error in estimating minimum values and this can lead to errors or inefficiency in estimating phase offset. By storing minima during periods of low load conditions, these minima can be used to estimate the "true" minima when a path is under high load and may be more accurate than the minimum determined from the timing messages sent under those conditions.

In particular embodiments, the processor is further arranged to: determine, from said timestamps, a forward displacement factor which is the difference between the interval between the times of receipt of successive first timing messages by the client and the interval between the times of sending of said successive first messages by the server; determine, from said timestamps, a reverse displacement factor which is the difference between the interval between the times of receipt of successive second timing messages by the server and the interval between the times of sending of said successive second timing messages by the client; maintain a running sum of said forward displacement factors over a predetermined time period; maintain a running sum of reverse displacement factors over a predetermined time period; determine a noise condition of the forward transmission path and a noise condition of the reverse transmission path over said predetermined time period; if it is determined that both the forward and reverse transmission paths have a low noise condition during said predetermined time period, determine a minimum of the sum of forward displacement factors and a minimum of the sum of reverse displacement factors over that period of time and store the determined minima as reference minimum values; and if it is determined during a future time period that one of the forward or reverse transmission paths has a high noise condition, whilst the other path has a low noise condition, use said reference minimum values and the minimum of the sum of displacement factors on the path with a low noise condition to estimate a minimum value for the sum of displacement factors on the path with a high noise condition.

The processor may be arranged to determine a noise condition on a transmission path by: calculating, based on the timestamps, a variance of a queuing delay on that path; applying a first moving average having a first time constant to the variance; applying a second moving average having a second time constant greater than the first time constant to the variance; calculating a difference between the first and second moving averages; and comparing the calculated difference to a threshold to determine a noise condition on the path.

For example, the moving averages may be exponentially-weighted moving averages (EWMAs).

Using a pair of moving averages allows determination of whether the current noise conditions (as represented by the moving average with the shorter time constant) have changed from an earlier steady-state period (as represented by the moving average with the longer time constant).

The threshold can be set *a-priori* if the conditions of the detection environment are known in advance or the threshold can be determined experimentally during operation (or a combination of both may be employed).

An alternative way of determining the noise conditions is to use the error variance-covariance matrix from a Kalman filter which is used in said estimation algorithm. This matrix is normally referred to as P and is a square matrix with the form

$$P = \begin{matrix} P_{11} & P_{12} \\ P_{21} & P_{22} \end{matrix}$$

where $P_{11}$ is the error variance of the phase offset, $P_{22}$ is the error variance of the skew (fractional frequency offset), and $P_{12}$ and $P_{21}$ represent the error covariance between the phase offset and the skew.

Thus in some embodiments of the invention, the processor is arranged to determine a noise condition on a transmission path by: determining the error variance-covariance matrix

$$P = \begin{matrix} P_{11} & P_{12} \\ P_{21} & P_{22} \end{matrix}$$

from a Kalman filter which is used in said estimation algorithm,

where $P_{11}$ is the error variance of the phase offset, $P_{22}$ is the error variance of the skew (fractional frequency offset), and $P_{12}$ and $P_{21}$ represent the error covariance between the phase offset and the skew.

As the value $P_{22}$ depends on the oscillator's stability, its variance, i.e., the variance of the $P_{22}$ term itself, is extremely low (almost non-existent). $P_{22}$ changes significantly only due to the external noise (and the primary external noise input is typically caused by forward and/or backward traffic load changes).

When external noise changes occur (e.g. the traffic load changes), $P_{22}$ reflects this by converging to a new stable level of error variance. Due to the filtering properties of the Kalman filter, this new level is, again, very stable (i.e., there is almost no variance). However, the magnitude of the new level will be very distinct from the previous state, provided there was a significant enough change in the noise conditions. Therefore, $P_{22}$ can be employed as input provide reliable indications of changing load conditions.

The time client of the present aspect may include any combination of some, all or none of the above described preferred and optional features.

The processor of the time client of the above aspect preferably operates by performing a method according to the first aspect of this invention, as described above, but need not do so.

A further embodiment of the present invention provides a networked time system having: a time server having a master clock; a time client having a local clock and a processor, and a network connecting the time server and the time client, wherein the time server is arranged to: send first timing messages in a forward direction to the time client, and receive second timing messages sent in a reverse direction from the time client, record timestamps which are the times of sending and times of receipt of the timing messages by the time server, and send said timestamps to the time client, wherein the time client is arranged to: receive said first timing messages; and send said second timing messages to the time server, record timestamps which are the times of sending and times of receipt of the timing messages by the time client; and receive timestamps which are the times of sending and the times of receipt of the timing messages by the time server, wherein the processor is arranged to: estimate, for each message in a window of predetermined length, the transmission delay experienced by the message; determine, from said estimates, a minimum estimated delay experienced by timing messages in the forward direction in that window, and a minimum estimated delay experienced by timing messages in the reverse direction in that window; determine, for each message in that window, the difference between the estimated transmission delay for that message and the minimum estimated delay for messages travelling in the same direction as that message; determine, from said differences, a queuing asymmetry measure for each exchange of first and second timing messages in that window; estimate the phase offset of the local clock at a time in said window using said timestamps and said queuing asymmetry measure as inputs to an estimation algorithm.

The network may be a packet network (using technologies such Ethernet, IP, MPLS, etc.).

The timing messages are preferably timing messages under the IEEE 1588 Precision Time Protocol (PTP).

In the time client according to the present aspect, the noise introduced by the queueing delays and the corresponding effects on offset estimation can be reduced by using the estimations of the queueing delays.

Thus the time client of the present aspect may significantly reduce the errors in phase offset estimation which result from variable and asymmetrical queueing delays.

In particular, the processor of the time client of the present aspect preferably uses a queuing asymmetry measure (preferably based on good estimations of the difference in the forward and reverse delays) directly in an estimation algorithm (such as a Kalman filter algorithm) as an integral part of the estimation process, rather than as a modifier to be applied after the operation of the estimation algorithm. This can lead to efficiencies in that the estimate algorithm is able to converge on a solution much faster and arrive at a more accurate solution in the time available.

In certain embodiments, the processor determines the queuing asymmetry measure as: $Q(n) = [(\hat{q}_f(n) - q_{fmin}) - (\hat{q}_r(n) - \hat{q}_{rmin})]$, wherein: $\hat{q}_f(n)$ is an estimate of the queuing delay experienced by the n-th first timing message; $\hat{q}_r(n)$ is an estimated of the queuing delay experienced by the n-th second timing message; $\hat{q}_{fmin}$ is the determined minimum value of $\hat{q}_f(n)$ in said window; and $\hat{q}_{rmin}$ is the determined minimum value of $\hat{q}_r(n)$ in said window.

This particular queuing asymmetry measure has been found to be particularly close to the true asymmetry in the delay for a particular pair of timing messages, whilst being calculated from values which are readily determined from the message exchange and estimations obtained in the method of the present aspect.

In certain embodiments the processor is arranged to determine the queuing asymmetry measure by: determining, from said timestamps, a forward displacement factor which is the difference between the interval between the times of receipt of successive first timing messages by the client and the interval between the times of sending of said successive first messages by the server; determining, from said timestamps, a reverse displacement factor which is the difference between the interval between the times of receipt of successive second timing messages by the server and the interval between the times of sending of said successive second timing messages by the client; maintaining a running sum of said forward displacement factors over a predetermined time period; maintaining a running sum of reverse displacement factors over a predetermined time period; and calculating the queuing asymmetry measure from said sums.

In preferred embodiments, the estimation algorithm is a Kalman filer, which may, for example, use the measurement equation: $(T_1(n) - T_2(n)) + (T_4(n) - T_3(n)) + Q(n) = 2\theta_E(n) + v_n$, wherein: $T_1(n)$ is the timestamp recorded by the server on sending of an n-th first timing message from the server to the client; $T_2(n)$ is the time of receipt as recorded by the client on receipt of the n-th first timing message; $T_3(n)$ is the timestamp recorded by the client on sending of an n-th second timing message from the client to the server; $T_4(n)$ is the time of receipt as recorded by the server on receipt of the n-th second timing message; $Q(n)$ is the queuing asymmetry measure; $v_n$ is the measurement noise; and $\theta_E(n)$ is an estimate of the local clock offset.

By inputting the queuing asymmetry measure directly into the calculations of the Kalman filter, the Kalman filter may converge much more rapidly on its solution.

The processor may be further arranged to determine the load conditions on the forward and reverse transmission paths. This may be of particular benefit in allowing stored values for minimum delays or minimum displacements from times when the load conditions are determined to be low to generate better estimates of minimum delays or minimum displacements when one of the transmission paths has high load conditions.

The load conditions on a particular path can cause significant bias and/or error in estimating minimum values and this can lead to errors or inefficiency in estimating phase offset. By storing minima during periods of low load conditions, these minima can be used to estimate the "true" minima when a path is under high load and may be more accurate than the minimum determined from the timing messages sent under those conditions.

In particular embodiments, the processor is further arranged to: determine, from said timestamps, a forward displacement factor which is the difference between the interval between the times of receipt of successive first timing messages by the client and the interval between the times of sending of said successive first messages by the server; determine, from said timestamps, a reverse displacement factor which is the difference between the interval between the times of receipt of successive second timing messages by the server and the interval between the times of sending of said successive second timing messages by the client; maintain a running sum of said forward displacement factors over a predetermined time period; maintain a running sum of reverse displacement factors over a predetermined time period; determine a noise condition of the forward transmission path and a noise condition of the reverse transmission path over said predetermined time period; if it is determined that both the forward and reverse transmission paths have a low noise condition during said predetermined time period, determine a minimum of the sum of forward displacement factors and a minimum of the sum of reverse displacement factors over that period of time and store the determined minima as reference minimum values; and if it is determined during a future time period that one of the forward or reverse transmission paths has a high noise condition, whilst the other path has a low noise condition, use said reference minimum values and the minimum of the sum of displacement factors on the path with a low noise condition to estimate a minimum value for the sum of displacement factors on the path with a high noise condition.

The processor may be arranged to determine a noise condition on a transmission path by: calculating, based on the timestamps, a variance of a queuing delay on that path; applying a first moving average having a first time constant to the variance; applying a second moving average having a second time constant greater than the first time constant to the variance; calculating a difference between the first and second moving averages; and comparing the calculated difference to a threshold to determine a noise condition on the path.

For example, the moving averages may be exponentially-weighted moving averages (EWMAs).

Using a pair of moving averages allows determination of whether the current noise conditions (as represented by the moving average with the shorter time constant) have changed from an earlier steady-state period (as represented by the moving average with the longer time constant).

The threshold can be set *a-priori* if the conditions of the detection environment are known in advance or the threshold can be determined experimentally during operation (or a combination of both may be employed).

An alternative way of determining the noise conditions is to use the error variance-covariance matrix from a Kalman filter which is used in said estimation algorithm. This matrix is normally referred to as $P$ and is a square matrix with the form

$$P = \begin{matrix} P_{11} & P_{12} \\ P_{21} & P_{22} \end{matrix}$$

where $P_{11}$ is the error variance of the phase offset, $P_{22}$ is the error variance of the skew (fractional frequency offset), and $P_{12}$ and $P_{21}$ represent the error covariance between the phase offset and the skew.

Thus in some embodiments of the invention, the processor is arranged to determine a noise condition on a transmission path by: determining the error variance-covariance matrix

$$P = \begin{matrix} P_{11} & P_{12} \\ P_{21} & P_{22} \end{matrix}$$

from a Kalman filter which is used in said estimation algorithm,

where $P_{11}$ is the error variance of the phase offset, $P_{22}$ is the error variance of the skew (fractional frequency offset), and $P_{12}$ and $P_{21}$ represent the error covariance between the phase offset and the skew.

As the value $P_{22}$ depends on the oscillator's stability, its variance, i.e., the variance of the $P_{22}$ term itself, is extremely low (almost non-existent). $P_{22}$ changes significantly only due to the external noise (and the primary external noise input is typically caused by forward and/or backward traffic load changes).

When external noise changes occur (e.g. the traffic load changes), $P_{22}$ reflects this by converging to a new stable level of error variance. Due to the filtering properties of the Kalman filter, this new level is, again, very stable (i.e., there is almost no variance). However, the magnitude of the new level will be very distinct from the previous state, provided there was a significant enough change in the noise conditions. Therefore, $P_{22}$ can be employed as input provide reliable indications of changing load conditions.

The system of the present aspect may include any combination of some, all or none of the above described preferred and optional features.

The processor of the time client of the above aspect preferably operates by performing a method according to the first aspect of this invention, as described above, but need not do so.

Brief Description of the Drawings

Embodiments of the invention will now be described by way of example with reference to the accompanying drawings in which:

Figure 1 shows the sequence of messages in a two-step clock synchronisation method under IEEE 1588 PTP and has already been described;

Figure 2 shows the relationship between master and slave clocks in situations with and without offset;

Figure 3 illustrates the path delays that may exist on communications between a master and slave;

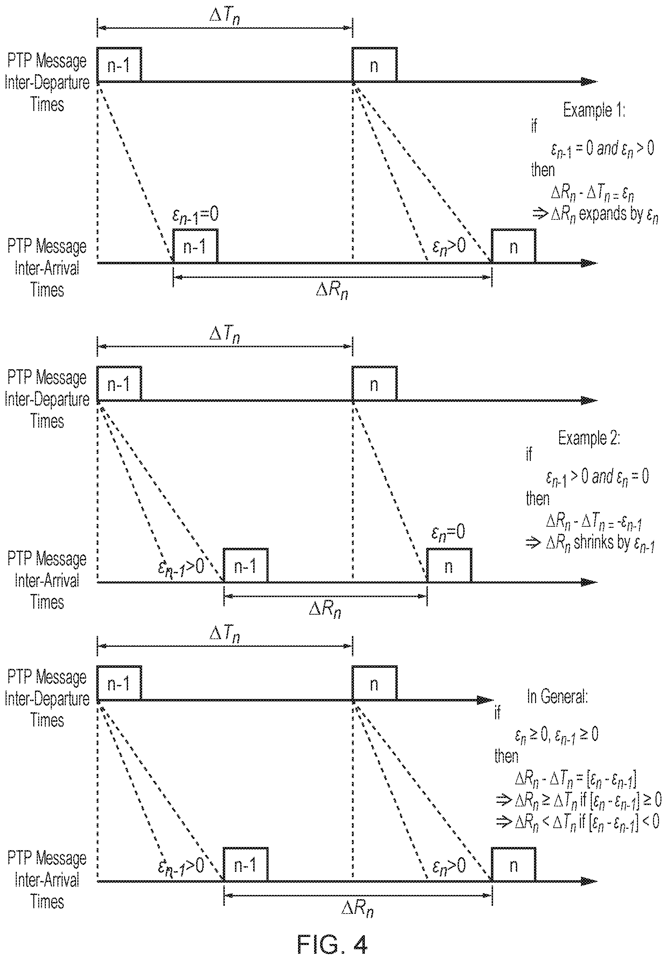

Figure 4 shows, in schematic form, the effect of packet delay variation on message inter-arrival times; and

Figure 5 shows, in schematic form, the operation of a method according to an embodiment of the present invention.

Detailed Description

*Basic Clock Model*

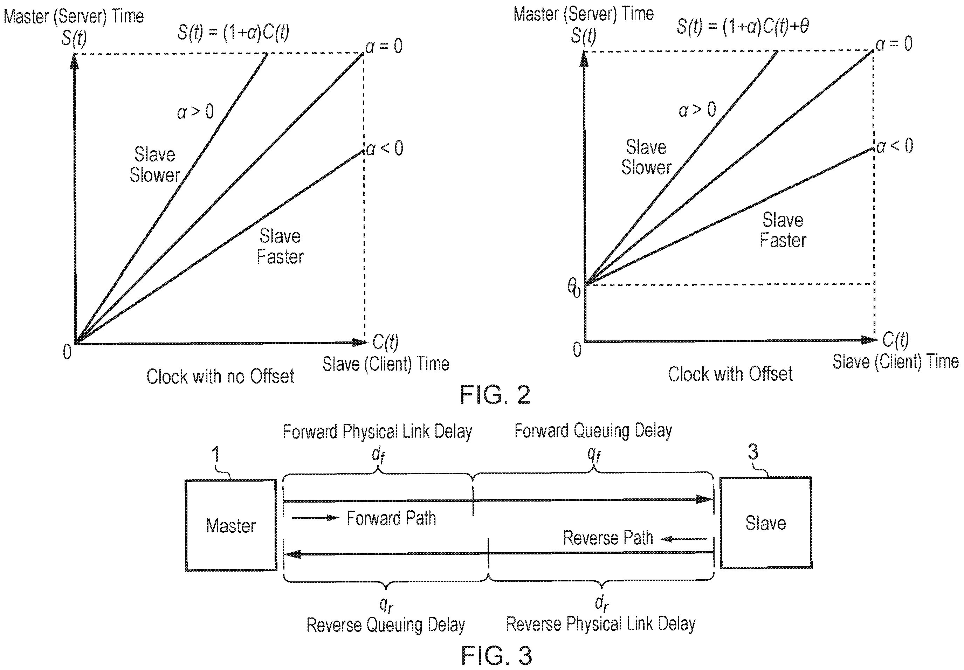

In order to consider the synchronization problem, we can define a generalized clock offset and skew equation for this problem. It is assumed that, at any particular time instant, the instantaneous view of the relationship between the master (server) clock 4 with timeline $S(t)$ and the slave (client) clock 5 with timeline $C(t)$, can be described by the well-know simple skew clock model depicted in Figure 2, and described by the equation,

$$S(t) = (1 + \alpha(t))C(t) + \theta_0 ,$$

where the skew $\alpha$ is a very small quantity in the order of parts-per-million. This snapshot is an instantaneous view of how well the two clocks are (mis)aligned. Figure 2 illustrates the influence of $\theta_0$ and $\alpha$ on the alignment.

The above equation can be extended to account for the case where the master clock 4 and slave clock 5 exchange messages over a communication link with delay. First, assume that the nth Sync message travels from a master to a slave experiences a fixed physical link (or propagation) delay of $d_f$ plus variable cumulative queuing (or stochastic) delay of $\hat{q}_f(n)$ (see Figure 3). Similarly, assume that the nth Delay_Req message sent from the slave 3 to the master 1 experiences a fixed delay of $d_r$ plus variable cumulative queuing delay of $q_r(n)$. An asymmetric path exists when the fixed delay components and/or queuing delay components in both directions are unequal. We assume that the physical link asymmetry is manually calibrated and compensated for but the queue-induced asymmetry can be compensated for using a technique as described in the embodiments below.

Equations 1 and 2 below are the two standard equations that describe the relationship between the timestamps exchanged between a master and a slave device in a time distribution network.

$$T_1(n) + q_f(n) = \big(1 + \alpha(n)\big)T_2(n) + \theta_0 \qquad (1)$$

$$T_4(n) - q_r(n) = \big(1 + \alpha(n)\big)T_3(n) + \theta_0 \qquad (2)$$

Where $T_1$, $T_2$, $T_3$ and $T_4$ are the timestamps from the standard one- or two-step clock message exchange under IEEE 1588.8 PTP ($T_1$ is the time of sending of a Sync message from the master to the slave according to the master clock; $T_2$ is the time of receipt of the Sync message according to the slave clock; $T_3$ is the time of sending of a Delay_Req message from the slave to the master according to the slave clock; and $T_4$ is the time of receipt of the Delay_Req message according to the master clock), $q_f[n]$ and $q_r[n]$ are the forward and reverse queueing delays and $\theta_0$ is the initial phase offset between the master and slave clocks; and $\alpha[n]$ is the slave clock skew with respect to master clock.

The fixed forward and reverse path delays are assumed to be known. The compensation of their impact on the final timing estimates at the slave is described in more detail in US Patent 9,112,628B.

From this it can be shown that:

$$\Delta q_f(n) = \big(1 + \alpha(n)\big)\Delta T_2(n) - \Delta T_1(n) \qquad (3)$$

$$\Delta q_r(n) = \Delta T_4(n) - \big(1 + \alpha(n)\big)\Delta T_3(n) \qquad (4)$$

where equation (3) is derived as the difference between equation (1) for time samples n and *(n-1)* and equation (4) is derived as the difference between equation (2) for time samples n and *(n-1)*. It is assumed for this subtraction that $\alpha(n) \simeq \alpha$ *(n - 1)*.

As in US 9,112,628B, $D_{fsum}(n)$ and $D_{rsum}(n)$ are defined as the summations of the forward and reverse displacements at time sample, n, respectively.

From equation 9 of US 9,112,628:

$$D_{fsum}(n) = D_{fsum}(n-1) + D_e(n)$$

Where $D_e(n)$ is the difference in the forward displacement at time sample n. Using the skew corrected displacement values, as discussed in the above patent, equation (3) above can be used, thus:

$$D_{fsum}(n) = D_{fsum}(n-1) + \Delta q_f(n) \qquad (5)$$

If it is assumed that the predetermined point at which the summation, defined by equation (5) above, commences is *n* = 0, equation (5) can be expanded by setting $D_{fsum}(0) = 0$

$$D_{fsum}(1) = D_{fsum}(0) + \Delta q_f(1) = \Delta q_f(1) = q_f(1) - q_f(0)$$

$$D_{fsum}(2) = D_{fsum}(1) + \Delta q_f(2) = \big(q_f(1) - q_f(0)\big) + \big(q_f(2) - q_f(1)\big) = q_f(2) - q_f(0)$$

$$D_{fsum}(3) = D_{fsum}(2) + \Delta q_f(3) = \big(q_f(2) - q_f(0)\big) + \big(q_f(3) - q_f(2)\big) = q_f(3) - q_f(0)$$

Thus by observation it can be seen that $D_{fsum}(n)$ tracks the forward delay at time instant n, but with an offset equal to the forward delay at the predetermined point chosen to commence the summation, i.e. as the above example started at instant *n* = 0 the offset is $q_f(0)$.

This procedure can be repeated for the reverse direction, in which case $D_{fsum}(n)$ tracks the reverse delay at time instant n, but with an offset of $q_r(0)$.

Note that, in the above, the summations are continuous and all estimates of the forward and reverse delays are relative to the initial $q_f(0)$ and $q_r(0)$ respectively.

Now the minimum values of $D_{fsum}(n)$ and $D_{rsum}(n)$ can be found over a window of, for example, *N* samples.

It is known that $D_{fsum}(n) = \hat{q}_f(n) - q_f(0)$ and thus it is desired to find the minimum value of $(q_f(n) - q_f(0))$ over all samples in the window from $n=1$ to $n=N$.

As $\hat{q}_f(n)$ and $q_f(0)$ are both $\geq 0$ and $q_f(0)$ is a fixed value over the entire window, the minimum value of $D_{fsum}(n)$, which we will call $MinD_{fsum}$, occurs when $\hat{q}_f(n)$ is a minimum, which will be referred to as $q_{fmin}$.

Hence

$$MinD_{fsum} = q_{fmin} - q_f(0)$$

Now the minimum value, $MinD_{fsum}$, for that window is subtracted from each value of $D_{fsum}(n)$ within the window:

$$D_{fsum}(n) - MinD_{fsum} = \left(q_f(n) - q_f(0)\right) - \left(q_{fmin}(n) - q_f(0)\right) = \left(q_f(n) - q_{fmin}\right)$$

As $\hat{q}_f(n)$ and $\hat{q}_r(n)$ are derived by summing the *estimated* delay variations between subsequent samples, in reality $\hat{q}_f(n)$ and $\hat{q}_r(n)$ are only estimates of the true values. The standard notation "^" will be used to represent these estimates. Thus the estimated forward delay becomes $\hat{q}_f(n)$ and the estimated reverse delay becomes $(\hat{q}_r(n))$. From simulations by the inventors it has been found that $\hat{q}_f(n)$ and $\hat{q}_r(n)$ track the true forward and reverse delays accurately.

Thus the above equation can be rewritten using "^" to represent estimates:

$$D_{fsum}(n) - MinD_{fsum} = \left(\hat{q}_f(n) - q_f(0)\right) - \left(\hat{q}_{fmin}(n) - q_f(0)\right) = \left(\hat{q}_f(n) - \hat{q}_{fmin}\right)$$

Hence for each window a term which is approximately equal to the forward delay, minus an offset equal to the minimum value of the estimated forward delay, can be tracked in that window.

A similar procedure for the reverse direction means that an approximation to the reverse delay, minus an offset equal to the minimum of the estimated reverse delay, can also be tracked in that window, $(\hat{q}_r(n) - \hat{q}_{rmin})$.

The following equations relate the master and slave timestamps and the *instantaneous* value of the phase difference. Again it will be assumed that the fixed forward and reverse delays are addressed separately.

$$T_1(n) + q_f(n) = T_2(n) + \theta_T(n) \tag{6}$$

$$T_4(n) - q_r(n) = T_3(n) + \theta_T(n) \tag{7}$$

Adding 6 and 7 gives:

$$2\theta_T(n) = (T_1(n) + T_4(n)) - \left(T_2(n) + T_3(n)\right) + q_f(n) - q_r(n) \tag{8}$$

where $\theta_T$ is the true phase offset which could be calculated if the value of the instantaneous delay asymmetry, $\hat{q}_f(n) - \hat{q}_r(n)$ was known. In practice of course $\hat{q}_f(n) - \hat{q}_r(n)$ is unknown and hence the instantaneous phase offset is measured as:

$$2\theta_M(n) = (T_1(n) + T_4(n)) - \left(T_2(n) + T_3(n)\right) \tag{9}$$

By observation of equations 8 and 9, the difference between the measured phase offset, $\theta_M(n)$, and the true phase offset, $\theta_T(n)$, is $(q_f(n) - q_r(n))/2$.

Most current implementations assume that, on average, there is no delay asymmetry. Thus when the phase offset, $\theta_M(n)$, is measured, the measurements at each time instant are offset by half the value of the delay asymmetry at that time instant, i.e., by $(q_f(n) - q_r(n))/2$. The variations in $(q_f(n) - q_r(n))$ occur every sample and can be quite large. These frequent and sometimes large changes make the task of estimating the phase offset difficult for any system. Ideally the $(q_f(n) - q_r(n))$ value would be removed before generating an estimate of, what would then be, the true phase estimate for each sample.

Unfortunately that cannot be done as only $(\hat{q}_f(n) - \hat{q}_{fmin})$ is known, and $\hat{q}_f(n)$ cannot be separated from $\hat{q}_{fmin}$ in a real-life implementation. Similarly $(\hat{q}_r(n) - \hat{q}_{rmin})$ is known and $\hat{q}_r(n)$ cannot be separated from $\hat{q}_{rmin}$. However, equation (8) can be manipulated such that the true phase offset estimate is impacted significantly less than if the delay asymmetry was not addressed at all.

It was shown above that it is possible to derive $(q_f(n) - \hat{q}_f min)$ and $(\hat{q}_r(n) - \hat{q}_{rmin})$ for any window of samples of interest. Thus the following can also be derived by subtracting these two terms:

$$\hat{q}_f(n) - \hat{q}_r(n) - (\hat{q}_{fmin} - \hat{q}_{rmin})$$

This term can be subtracted from the r. h. s. of equation (8) and a new approximation to the true phase estimate, $\hat{\theta}_T(n)$, that results can be redefined. Thus:

$$2\hat{\theta}_T(n) = (T_1(n) + T_4(n)) - (T_2(n) + T_3(n)) + \left(q_f(n) - q_r(n)\right) - [(\hat{q}_f(n) - \hat{q}_{fmin}) - (\hat{q}_r(n) - \hat{q}_{rmin})]$$

Rearranging gives:

$$2\hat{\theta}_T(n) = (T_1(n) + T_4(n)) - (T_2(n) + T_3(n)) + [(q_f(n) - \hat{q}_f(n)) - (q_r(n) - \hat{q}_r(n))] - (\hat{q}_{fmin} - \hat{q}_{rmin}) \qquad (10)$$

Again in practice $(q_f(n) - q_r(n))$ is unknown and hence true phase estimate, $\hat{\theta}_T(n)$, becomes $\theta_E(n)$ and is estimated as:

$$2\theta_E(n) = (T_1(n) + T_4(n)) - (T_2(n) + T_3(n)) - [(\hat{q}_f(n) - \hat{q}_{fmin}) - (\hat{q}_r(n) - \hat{q}_{rmin})] \quad (11)$$

By comparing equations 11 and 8, it can be seen that the resultant phase difference between $\theta_E(n)$ and $\theta_T(n)$ due to the substituted asymmetry term, is:

$$\left(q_f(n) - q_r(n)\right) - [(\hat{q}_f(n) - \hat{q}_{fmin}) - (\hat{q}_r(n) - \hat{q}_{rmin})]$$

Rearranging this becomes:

$$[(q_f(n) - \hat{q}_f(n)) - (q_r(n) - \hat{q}_r(n))] - (\hat{q}_{fmin} - \hat{q}_{rmin})$$

As already mentioned, it has been determined from simulation results that $(\hat{q}_f(n) - \hat{q}_r(n))$ is a very good estimate of $(q_f(n) - q_r(n))$. Hence the difference in the phase estimate is dominated by $(\hat{q}_{fmin} - \hat{q}_{rmin})$. This term is only updated at a frequency equal to the window length. The value of $(\hat{q}_{fmin} - \hat{q}_{rmin})$ will, also almost always, be smaller than $(q_f(n) - q_r(n))$. Given the less frequent, and in general smaller changes which result from adopting the formation in equation (11), the task of any estimation algorithm is much less challenging. Therefore equation (11) can be used as the basis for a phase estimation process, for example as outlined below.

Note that this approach can be used with any timing estimation algorithm. The ability to substitute for the delay asymmetry by a term that varies much less in absolute terms and also less frequently than the raw delay asymmetry will significantly increase the accuracy of estimation of any algorithm. As an example, the above delay asymmetry correction can be used in any of the algorithms presented in [3]. For example, equations (3), (6), (18), (19) in the above reference could be updated with the queuing delay estimates presented in the present application in order to achieve better conversion, precision and accuracy. Therefore the algorithm described in detail in the embodiment below is only an example of such an algorithm.

*Phase Estimation Process*

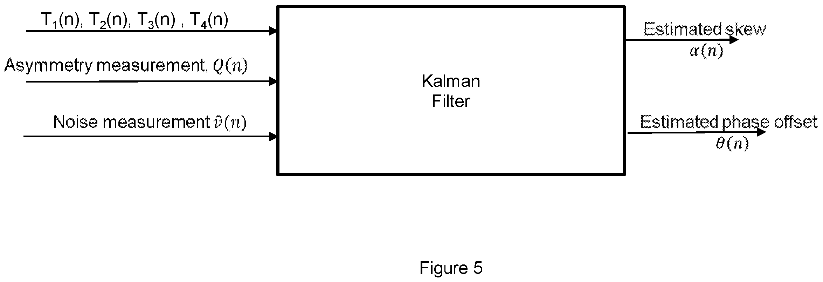

The phase estimation process according to an embodiment of the present invention employs equation (10) above to define the estimation process and produce the $\theta_E(n)$ estimates. The process is illustrated schematically in Figure 5 and employs a Kalman filter acting on the timestamps, the queuing asymmetry measurement and a noise measurement to produce an estimated skew and an estimated phase offset for the slave clock.

The time stamps $T_1(n)$, $T_2(n)$, $T_3(n)$ and $T_4(n)$ are measured at the master and slave as per well-established existing practice. The values of $(q_f(n) - \hat{q}_{fmin})$ and $(\hat{q}_r(n) - \hat{q}_{rmin})$ are then generated as discussed above.

The Kalman filter is a particular example of an estimation algorithm that can take advantage of equation (11), although other estimation techniques could equally be employed. The conventional Kalman filter measurement equation is modified to accommodate equation (11). By rearranging equation (11), the measurement equation now becomes:

$$(T_1(n) + T_4(n)) - (T_2(n) + T_3(n)) - \left[(\hat{q}_f(n) - \hat{q}_{fmin}) - (\hat{q}_r(n) - \hat{q}_{rmin})\right] = 2\theta_E(n) + v_n$$

where the left-hand side of the above equation is the term $Y_n$, $v_n$ is the measurement noise, and the $2\theta_E(n)$ term is made up of the measurement matrix $D_n = [2\ 0]$ and the state vector $X_n = [\theta_E(n)\ \alpha(n)]$. All the other terms are as defined above. The Kalman filter state equation is unchanged as $X_n = A_n X_{n-1} + w_n$ where $A_n$ is a known M-by-M state transition matrix and $w_n$ is an M-dimensional process noise vector which is assumed to be drawn from a zero mean multivariate normal distribution with covariance $Q_n = E[w_n - w_n^T]$, $w_n \sim N(0, Q_n)$. The prediction and update phases operate as has been previously described, for example in US 9,112,628B.

Some additional challenges are faced in the phase estimation process:

1. When there is very high background traffic on one of the paths (forward or reverse), the minimum reference found within a window for the highly loaded path is significantly biased and will be much higher than the "true" minimum. Note that the "true" minimum refers to the minimum that would be discovered if there was no background load on that particular path. The solution discussed above is of course also impacted by the background load and hence the "true" minimum is not found even for lightly loaded situations. However, under light background load conditions, it is assumed that the forward and reverse minimum queuing delays are almost equal, hence the system can be considered symmetrical. For a system that is close to being symmetrical there is thus a negligible impact on the accuracy of the phase estimation. The specific challenge referred to here is the situation where there is very high background traffic on one of the paths.

2. As the estimated skew factor, $\alpha(n)$, from equations (1) and (2) has only limited precision, an error term, $\alpha_e(n)$, which represents the error between the true skew and the estimated skew, can be explicitly represented in these equations. The distribution of values of $\alpha_e(n)$ is a zero mean, approximately, Gaussian distribution. As $D_{fsum}(n)$ and $D_{rsum}(n)$ are cumulative summations (equation (5)) which are derived from equation (3) (and the corresponding summation derived from equation (4) for the reverse direction), both $D_{fsum}(n)$ and $D_{rsum}(n)$ manifest random walk behaviour (Wiener process-like). If the $MinD_{fsum}$ and $MinD_{rsum}$ happen to be separated significantly in time this Wiener 'drift' will introduce an error to the value of $[MinD_{fsum} - MinD_{rsum}]$. This in turn will increase the error in the phase offset estimation (which is impacted directly by $[MinD_{fsum} - MinD_{rsum}]$). It is therefore **not** possible to find the values, $MinD_{fsum}$ and $MinD_{rsum}$ during good conditions and simply use those values as the minimum value estimates in windows which occur much later. To address this Weiner drift a further novel technique is introduced as discussed below.

The equations which define $\Delta q_f$ and $\Delta q_r$ from equations (3) and (4) above, are reproduced below but now explicitly include the skew estimation error, $\alpha_e[n]$:

$$\Delta q_f(n) = \left(1 + \alpha(n) + \alpha_e(n)\right)\Delta T_2(n) - \Delta T_1(n) \tag{12}$$

$$\Delta q_r(n) = \Delta T_4(n) - \left(1 + \alpha(n) + \alpha_e(n)\right)\Delta T_3(n) \tag{13}$$

Note that, as the skew error has opposite signs in (12) and (13), the cumulative summation ($D_{fsum}(n)$) derived from equation (12) will drift in the opposite direction to the cumulative summation ($D_{rsum}(n)$) from equation (13). As the skew, $\alpha(n)$ is estimated using a Kalman filter, and the Kalman filter is effectively a whitening filter, the estimation error, $\alpha_e(n)$ will be very close to zero mean Gaussian white noise. The cumulative summations $D_{fsum}(n)$ generated from equation (12) and $D_{rsum}(n)$ produced from the corresponding reverse direction, equation (13), thus both suffer from random drift.

To address both of these problems the following approach is adopted:

1. When the conditions are favourable on both paths (see the next section on Noise Estimation), i.e., both the forward and reverse paths are lightly loaded, $MinD_{rsum}$ and $MinD_{rsum}$ are found as described above and these two values stored as reference points for future use. These will be called $MinD_{fsumref}$ and $MinD_{rsumref}$ for the forward and reverse directions respectively.

2. Under lightly loaded situations the $MinD_{fsum}$ and $MinD_{rsum}$ values continue to be found in every window. If $w$ is used to represent the index of the windows, these values can be designated as $MinD_{fsum}(w)$ and $MinD_{rsum}(w)$ for window $w$. The computations of $MinD_{fsum}(w)$ and $MinD_{rsum}(w)$ will drift from $MinD_{fsumref}$ and $MinD_{rsumref}$ by the same absolute value, but in opposite directions due to the Weiner 'drift'. Thus, if the Weiner drift in the forward direction is defined as $WD_f$, then:

$$WD_f = MinD_{fsum}(w) - MinD_{fsumref} \qquad (14)$$

And, if the Weiner drift in the reverse direction is defined as $WD_r$, then:

$$WD_r = MinD_{rsum}(w) - MinD_{rsumref} \qquad (15)$$

And, thus as explained above:

$$WD_f = -WD_r \qquad (16)$$

3. Now when heavy loaded conditions are encountered on one path (see the next section on Noise Estimation), say the reverse path, equations (14)-(16) can be employed to estimate $MinD_{rsum}(w)$ using the discovered minimum values $MinD_{fsum}(w)$ and the two reference values $MinD_{fsumref}$ and $MinD_{rsumref}$. Equally if the heavily loaded path is the forward path, $MinD_{fsum}(w)$ can similarly be estimated. This can be represented as follows:
If the reverse path is less heavily loaded:

$$MinD_{fsum}{}'(w) = MinD_{fsumref} - MinD_{rsum}(w) + MinD_{rsumref} \qquad (17)$$

If the forward path is less heavily loaded:

$$MinD_{rsum}{}'(w) = MinD_{rsumref} - MinD_{fsum}(w) + MinD_{fsumref} \qquad (18)$$

where $MinD_{fsum}'(w)$ and $MinD_{rsum}'(w)$ are the **re-estimated** minimum values using the stored minimum reference values, the measured minimum on the less heavily loaded path and the relationship between them as defined by equations (14)-(16).

**Noise condition estimation**

To gain an understanding of current noise conditions, a number of statistical properties of $\hat{q}_f(n)$ and $q_r(n)$, such as, mean, median, variance (and other statistical moments) can be tracked and compared. As the performance of the Kalman filter algorithm depends on noise variance, and for synchronization the majority of the noise comes from the variability of forward and reverse queueing delays, it is most appropriate to focus on the variance $var\{q_f\}$ and $var\{q_r\}$.

From probability theory it follows that variance of the first difference of a random variable is related to the variance of the random variable as follows:

$$var\{\Delta X\} = 2var\{X\} \qquad (19)$$

Now using equations (3) and (19) it follows that one may compute $var\{q_f\}$ and $var\{q_r\}$ as follows:

$$var\{q_f\} = \tfrac{1}{2}var\{\Delta q_f\} = \tfrac{1}{2}var\{(1 + \alpha(n))\Delta T_2(n) - \Delta T_1(n)\} \qquad (20)$$

$$var\{q_r\} = \tfrac{1}{2}var\{\Delta q_r\} = \tfrac{1}{2}var\{\Delta T_4(n) - (1 + \alpha(n))\Delta T_3(n)\} \qquad (21)$$

Since the contribution of the term $\alpha(n)\Delta T_2(n)$ in (17) and term $\alpha(n)\Delta T_3(n)$ in (21) are both at least several orders of magnitude less than the term $\Delta T_2(n)$ in (20) and $\Delta T_3(n)$ in (21) respectively, the above equations can be re-written as:

$$var\{q_f\} = \tfrac{1}{2}var\{\Delta q_f\} \approx \tfrac{1}{2}var\{\Delta T_2(n) - \Delta T_1(n)\} \qquad (22)$$

$$var\{q_r\} = \tfrac{1}{2}var\{\Delta q_r\} \approx \tfrac{1}{2}var\{\Delta T_4(n) - \Delta T_3(n)\} \qquad (23)$$

To monitor and compare noise conditions on the forward and reverse paths, only the changes in $var\{q_f\}$ and $var\{q_r\}$ over time need to be tracked and this can be achieved using, for example, an Exponentially Weighted Moving Average (EWMA) filter as disclosed in US 9,184,861.

To categorize the noise conditions on the forward and reverse directions, the average value of the noise variance on the forward path and the average value in the reverse direction both need to be found during steady state periods (i.e., when no change is occurring). The noise condition is deemed to have changed from the current category to a new category if the noise variance has changed sufficiently from the steady state average.

A change detector can be implemented using two EWMA filters with different time constants, i.e., an EWMA filter with a long time constant which approximates the average value of a variable and one with a short time constant which is sensitive to changes in the variable. An EWMA filter can be defined as:

$$y(n) = (1 - \mu)y(n) + \mu x(n) \qquad (24)$$

where $\mu$ is the time constant (filtering factor) defined as follows:

$$\mu_Q = 1 - e^{(-1/\tau_Q)} \qquad (25)$$

$$\mu_S = 1 - e^{(-1/\tau_S)} \qquad (26)$$

and x(n) is the input variable which is being tracked (the outputs from (22) or (23) are both used in this case). Typically, $\tau_Q$ and $\tau_S$ can be set as 60s and 600s respectively. Now the detection is obtained by comparing the outputs of the two filters as follows:

$$e(n) = y_Q(n) - y_S(n) = (1 - \mu_Q)y_Q(n-1) - (1 - \mu_S)y_S(n-1) + x(n)(\mu_Q - \mu_S) \qquad (27)$$

The absolute value of e(n) (from (27)) for each input, var{$q_f$} or var{$q_r$}, is compared to the same threshold. If |e(n)| > *threshold,* a change is considered to have been detected. The threshold can be set a-priori if the conditions of the detection environment are known in advance or the threshold can be determined experimentally during operation (or a combination of both).

Note that the sign of e(n) from (27) defines whether the conditions have improved, or have deteriorated. A positive sign indicates worse conditions, i.e., higher noise. Thus if the value |e(n)| exceeds the threshold, calculated with var{$q_f$} as input and e(n) is positive, then a load increase on the forward direction is indicated.

Part of the error variance-covariance matrix, P, from a Kalman filter (for example as descried earlier), can be used to provide the input variable for equation (27), instead of var{$q_f$} or var{$q_r$}.

Matrix P is a square matrix defined as:

$$P = \begin{matrix} P_{11} & P_{12} \\ P_{21} & P_{22} \end{matrix} \qquad (28)$$

where $P_{11}$ is error variance of the phase offset, $P_{22}$ is the error variance of the skew (fractional frequency offset), and $P_{12}$ and $P_{21}$ represent the error covariance between the phase offset and the skew. As the value $P_{22}$ depends on the oscillator's stability (OCXO in the case of telecom applications), its variance, i.e., the variance of the $P_{22}$ term itself, is extremely low (almost non-existent). $P_{22}$ changes significantly only due to the external noise (and the primary external noise input is caused by forward and/or backward traffic load changes). This has been verified in realistic conditions using simulation.

When external noise changes occur (i.e. the traffic load changes), $P_{22}$ reflects this by converging to a new stable level of error variance. Due to the filtering properties of the Kalman filter, this new level is, again, very stable (i.e., there is almost no variance). However, the magnitude of the new level will be very distinct from the previous state, provided there was a significant enough change in the noise conditions. Therefore, $P_{22}$ can be employed as input to (27) to provide reliable indications of changing load conditions. To determine whether the load on the forward or reverse direction has changed, the values var{$q_f$} or var{$q_r$}, from equations (22) and (23), are examined to see which one has changed significantly from the average.

*Using Sync-E to improve the accuracy of the packet delay estimation*

All packet delay estimation algorithms, including the algorithm presented above, are highly dependent on the accuracy of the skew estimate. Where Sync-E technology is available it provides very accurate frequency estimates. These Sync-E based frequency estimates would be much more precise than frequency estimations from other approaches, such as the Kalman filter.

The impact of Sync-E on estimation accuracy is obvious from equations (12) and (13), where the $\alpha_e$ term would be exceedingly small for Sync-E. If, $\alpha_e$ is small, the Wiener drift would also be exceedingly small and hence the packet delay estimation would be much more precise. The improved frequency estimation accuracy provided by Synch-E would also improve the performance of other parts of the synchronization system, further improving the overall accuracy of the master/slave phase offset estimation.

The systems and methods of the above embodiments may be implemented in a computer system (in particular in computer hardware or in computer software) in addition to the structural components and user interactions described.

The term "computer system" includes the hardware, software and data storage devices for embodying a system or carrying out a method according to the above described embodiments. For example, a computer system may comprise a central processing unit (CPU), input means, output means and data storage. Preferably the computer system has a monitor to provide a visual output display. The data storage may comprise RAM, disk drives or other computer readable media. The computer system may include a plurality of computing devices connected by a network and able to communicate with each other over that network.

The methods of the above embodiments may be provided as computer programs or as computer program products or computer readable media carrying a computer program which is arranged, when run on a computer, to perform the method(s) described above.

The term "computer readable media" includes, without limitation, any non-transitory medium or media which can be read and accessed directly by a computer or computer system. The media can include, but are not limited to, magnetic storage media such as floppy discs, hard disc storage media and magnetic tape; optical storage media such as optical discs or CD-ROMs; electrical storage media such as memory, including RAM, ROM and flash memory; and hybrids and combinations of the above such as magnetic/optical storage media.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the invention.

In particular, although the methods of the above embodiments have been described as being implemented on the systems of the embodiments described, the methods and systems of the present invention need not be implemented in conjunction with each other, but can be implemented on alternative systems or using alternative methods respectively.

**References**

1. US 9,184,861 Aweya et al. - Method and devices for compensating for path asymmetry.
2. US 9,112,628 Aweya et al. - Method and devices for synchronization.
3. A. Bletsas: "Evaluation of Kalman filtering for network time keeping," IEEE Trans. on Ultrason., Ferroel., and Freq. Control, 09/2005.

**Claims**

1. A method of estimating a phase offset of a local clock (5) of a time client (3) compared with a master clock (4) of a time server (1) connected to the time client over a network (2), the method including the steps of:

    sending first timing messages in a forward direction from the time server (1) to the time client (3) and second timing messages in a reverse direction from the time client to the time server, and recording timestamps which are the times of sending and times of receipt of the timing messages;
    estimating, for each message in a window of predetermined length, the transmission delay experienced by the message;
    determining, from said estimates, a minimum estimated delay experienced by timing messages in the forward direction in that window, and a minimum estimated delay experienced by timing messages in the reverse direction in that window;
    determining, for each message in that window, the difference between the estimated transmission delay for that message and the minimum estimated delay for messages travelling in the same direction as that message;
    determining, from said differences, a queuing asymmetry measure for each exchange of first and second timing messages in that window;
    estimating the phase offset of the local clock (5) at a time in said window using said timestamps and said queuing asymmetry measure as inputs to an estimation algorithm,
determining, from said timestamps, a forward displacement factor which is the difference between the interval between the times of receipt of successive first timing messages by the client and the interval between the times of sending of said successive first messages by the server;
determining, from said timestamps, a reverse displacement factor which is the difference between the interval between the times of receipt of successive second timing messages by the server and the interval between the times of sending of said successive second timing messages by the client;
maintaining a running sum of said forward displacement factors over a predetermined time period;
maintaining a running sum of reverse displacement factors over a predetermined time period; **characterised in that** the method further comprises the steps of:

determining a noise condition of the forward transmission path and a noise condition of the reverse transmission path over said predetermined time period;
if it is determined that both the forward and reverse transmission paths have a low noise condition during said predetermined time period, determining a minimum of the sum of forward displacement factors and a minimum of the sum of reverse displacement factors over that period of time and storing the determined minima as reference minimum values; and
if it is determined during a future time period that one of the forward or reverse transmission paths has a high noise condition, whilst the other path has a low noise condition, using said reference minimum values and the minimum of the sum of displacement factors on the path with a low noise condition to estimate a minimum value for the sum of displacement factors on the path with a high noise condition.

2. A method according to claim 1, wherein the queuing asymmetry measure is determined as:

$$Q(n) = [(\hat{q}_f(n) - \hat{q}_{fmin}) - (\hat{q}_r(n) - \hat{q}_{rmin})]$$

wherein:

$\hat{q}_f(n)$ is an estimate of a queuing delay experienced by the n-th first timing message;
$\hat{q}_r(n)$ is an estimated of a queuing delay experienced by the n-th second timing message;
$\hat{q}_{fmin}$ is the determined minimum value of $\hat{q}_f(n)$ in said window; and
$\hat{q}_{rmin}$ is the determined minimum value of $\hat{q}_r(n)$ in said window.

3. A method according to claim 1 or claim 2, wherein the step of determining the queuing asymmetry measure includes: calculating the queuing asymmetry measure from said running sums.

4. A method according to any one of claims 1 to 3, wherein the estimation algorithm is a Kalman filter which uses the measurement equation:

$$\big(T_1(n) - T_2(n)\big) + \big(T_4(n) - T_3(n)\big) + Q(n) = 2\theta_E(n) + v_n$$

wherein:

$T_1(n)$ is the timestamp recorded by the server on sending of an n-th first timing message from the server to the client;
$T_2(n)$ is the time of receipt as recorded by the client on receipt of the n-th first timing message;
$T_3(n)$ is the timestamp recorded by the client on sending of an n-th second timing message from the client to the server;
$T_4(n)$ is the time of receipt as recorded by the server on receipt of the n-th second timing message;
$Q(n)$ is the queuing asymmetry measure;
$v_n$ is the measurement noise; and
$\theta_E(n)$ is an estimate of the local clock offset.

5. A method according to any one of claims 1-4, wherein the step of determining a noise condition on a transmission path involves:

calculating, based on the timestamps, a variance of a queuing delay on that path;
applying a first moving average having a first time constant to the variance;
applying a second moving average having a second time constant greater than the first time constant to the variance;
calculating a difference between the first and second moving averages; and
comparing the calculated difference to a predetermined threshold to determine a noise condition on the path.

6. A method according to any one of claims 1-4 wherein the step of determining a noise condition on a transmission path involves:

determining the error variance-covariance matrix

$$P = \begin{matrix} P_{11} & P_{12} \\ P_{21} & P_{22} \end{matrix}$$

from a Kalman filter which is used in said estimation algorithm,
where $P_{11}$ is the error variance of the phase offset, $P_{22}$ is the error variance of the skew (fractional frequency offset), and $P_{12}$ and $P_{21}$ represent the error covariance between the phase offset and the skew.

7. A time client (3) having a local clock (5) and a processor, and connected over a network (2) to a time server (1) having a master clock (4), wherein the time client is arranged to:

receive first timing messages sent in a forward direction from the time server (1) to the time client (3); and send second timing messages in a reverse direction from the time client (3) to the time server (1),
record timestamps which are the times of sending and times of receipt of the timing messages by the time client; and
receive timestamps which are the times of sending and the times of receipt of the timing messages by the time server,
wherein the processor is arranged to:

estimate, for each message in a window of predetermined length, the transmission delay experienced by the message;
determine, from said estimates, a minimum estimated delay experienced by timing messages in the forward direction in that window, and a minimum estimated delay experienced by timing messages in the reverse direction in that window;
determine, for each message in that window, the difference between the estimated transmission delay for that message and the minimum estimated delay for messages travelling in the same direction as that message;
determine, from said differences, a queuing asymmetry measure for each exchange of first and second timing messages in that window;
estimate the phase offset of the local clock at a time in said window using said timestamps and said queuing asymmetry measure as inputs to an estimation algorithm,
determine, from said timestamps, a forward displacement factor which is the difference between the interval between the times of receipt of successive first timing messages by the client and the interval between the times of sending of said successive first messages by the server;
determine, from said timestamps, a reverse displacement factor which is the difference between the interval between the times of receipt of successive second timing messages by the server and the interval between the times of sending of said successive second timing messages by the client;
maintain a running sum of said forward displacement factors over a predetermined time period;
maintain a running sum of reverse displacement factors over a predetermined time period; **characterised in that** the processor is further arranged to:

determine a noise condition of the forward transmission path and a noise condition of the reverse transmission path over said predetermined time period;
if it is determined that both the forward and reverse transmission paths have a low noise condition during said predetermined time period, determine a minimum of the sum of forward displacement factors and a minimum of the sum of reverse displacement factors over that period of time and store the determined minima as reference minimum values; and

if it is determined during a future time period that one of the forward or reverse transmission paths has a high noise condition, whilst the other path has a low noise condition, use said reference minimum values and the minimum of the sum of displacement factors on the path with a low noise condition to estimate a minimum value for the sum of displacement factors on the path with a high noise condition.

8. A time client according to claim 7, wherein the processor determines the queuing asymmetry measure as:

$$Q(n) = [(\hat{q}_f(n) - \hat{q}_{fmin}) - (\hat{q}_r(n) - \hat{q}_{rmin})]$$

wherein:

$\hat{q}_f(n)$ is an estimate of a queuing delay experienced by the $n$-th first timing message;
$\hat{q}_r(n)$ is an estimated of a queuing delay experienced by the $n$-th second timing message;
$\hat{q}_{fmin}$ is the determined minimum value of $\hat{q}_f(n)$ in said window; and
$\hat{q}_{rmin}$ is the determined minimum value of $\hat{q}_r(n)$ in said window.

9. A time client (3) according to claim 7 or claim 8, wherein the processor is arranged to determine the queuing asymmetry measure by: calculating the queuing asymmetry measure from said running sums.

10. A time client (3) according to any one of claims 7 to 9, wherein the estimation algorithm used by the processor is a Kalman filer which uses the measurement equation:

$$\big(T_1(n) - T_2(n)\big) + \big(T_4(n) - T_3(n)\big) + Q(n) = 2\theta_E(n) + v_n$$

wherein:

$T_1(n)$ is the timestamp recorded by the server on sending of an $n$-th first timing message from the server to the client;
$T_2(n)$ is the time of receipt as recorded by the client on receipt of the $n$-th first timing message;
$T_3(n)$ is the timestamp recorded by the client on sending of an $n$-th second timing message from the client to the server;
$T_4(n)$ is the time of receipt as recorded by the server on receipt of the $n$-th second timing message;
$Q(n)$ is the queuing asymmetry measure;
$v_n$ is the measurement noise; and
$\theta_E(n)$ is an estimate of the local clock offset.

11. A time client (3) according to any one of claims 7-10, wherein the processor is arranged to determine a noise condition on a transmission path by:

calculating, based on the timestamps, a variance of a queuing delay on that path;
applying a first moving average having a first time constant to the variance;
applying a second moving average having a second time constant greater than the first time constant to the variance;
calculating a difference between the first and second moving averages; and
comparing the calculated difference to a predetermined threshold to determine a noise condition on the path.

12. A time client (3) according to any one of claims 7-10 wherein the processor is arranged to determine a noise condition on a transmission path by:

determining the error variance-covariance matrix

$$P = \begin{matrix} P_{11} & P_{12} \\ P_{21} & P_{22} \end{matrix}$$

from a Kalman filter which is used in said estimation algorithm,

where $P_{11}$ is the error variance of the phase offset, $P_{22}$ is the error variance of the skew (fractional frequency offset), and $P_{12}$ and $P_{21}$ represent the error covariance between the phase offset and the skew.

13. A networked time system having:

a time server (1) having a master clock (4);
a time client (3) having a local clock (5) and a processor, and
a network (2) connecting the time server and the time client,
wherein the time server (1) is arranged to:

send first timing messages in a forward direction to the time client (3), and receive second timing messages sent in a reverse direction from the time client,
record timestamps which are the times of sending and times of receipt of the timing messages by the time server, and
send said timestamps to the time client,
wherein the time client (3) is arranged to:

receive said first timing messages; and send said second timing messages to the time server (1),
record timestamps which are the times of sending and times of receipt of the timing messages by the time client; and
receive timestamps which are the times of sending and the times of receipt of the timing messages by the time server,
wherein the processor is arranged to:

estimate, for each message in a window of predetermined length, the transmission delay experienced by the message;
determine, from said estimates, a minimum estimated delay experienced by timing messages in the forward direction in that window, and a minimum estimated delay experienced by timing messages in the reverse direction in that window;
determine, for each message in that window, the difference between the estimated transmission delay for that message and the minimum estimated delay for messages travelling in the same direction as that message;
determine, from said differences, a queuing asymmetry measure for each exchange of first and second timing messages in that window;
estimate the phase offset of the local clock (5) at a time in said window using said timestamps and said queuing asymmetry measure as inputs to an estimation algorithm,
determine, from said timestamps, a forward displacement factor which is the difference between the interval between the times of receipt of successive first timing messages by the client and the interval between the times of sending of said successive first messages by the server;
determine, from said timestamps, a reverse displacement factor which is the difference between the interval between the times of receipt of successive second timing messages by the server and the interval between the times of sending of said successive second timing messages by the client;
maintain a running sum of said forward displacement factors over a predetermined time period;
maintain a running sum of reverse displacement factors over a predetermined time period; **characterised in that** the processor is further arranged to:

determine a noise condition of the forward transmission path and a noise condition of the reverse transmission path over said predetermined time period;
if it is determined that both the forward and reverse transmission paths have a low noise condition during said predetermined time period, determine a minimum of the sum of forward displacement factors and a minimum of the sum of reverse displacement factors over that period of time and store the determined minima as reference minimum values; and
if it is determined during a future time period that one of the forward or reverse transmission paths has a high noise condition, whilst the other path has a low noise condition, use said reference minimum values and the minimum of the sum of displacement factors on the path with a low noise condition to estimate a minimum value for the sum of displacement factors on the path with a high noise condition.

## Patentansprüche

1. Verfahren des Schätzens einer Phasenverschiebung einer lokalen Uhr (5) eines Zeit-Clients (3) im Vergleich zu einer Hauptuhr (4) eines Zeitservers (1), der mit dem Zeit-Client über ein Netzwerk (2) verbunden ist, wobei das Verfahren die folgenden Schritte beinhaltet:

   Senden von ersten Zeitnachrichten in eine Vorwärtsrichtung von dem Zeitserver (1) an den Zeit-Client (3) und zweiten Zeitnachrichten in eine Rückwärtsrichtung von dem Zeit-Client an den Zeitserver, und Aufzeichnen von Zeitstempeln, die die Zeit des Sendens und die Zeiten des Empfangs der Zeitnachrichten sind,

   Schätzen, für jede Nachricht in einem Fenster von vorbestimmter Länge, der Übertragungsverzögerung, die von der Nachricht erfahren wird;

   Bestimmen, aus den Schätzungen, einer minimalen geschätzten Verzögerung, die von Zeitnachrichten in der Vorwärtsrichtung in diesem Fenster erfahren wird, und einer minimalen geschätzten Verzögerung, die von Zeitnachrichten in der Rückwärtsrichtung in diesem Fenster erfahren wird;

   Bestimmen, für jede Nachricht in diesem Fenster, der Differenz zwischen der geschätzten Übertragungsverzögerung für diese Nachricht und der minimalen geschätzten Verzögerung für Nachrichten, die sich in die gleiche Richtung wie diese Nachricht bewegen;

   Bestimmen, aus den Differenzen, einer Warteschlangenasymmetriemessung für jeden Austausch von ersten und zweiten Zeitnachrichten in diesem Fenster;

   Schätzen der Phasenverschiebung der lokalen Uhr (5) zu einer Zeit in diesem Fenster unter Verwendung der Zeitstempel und der Warteschlangenasymmetriemessung als Eingaben an einen Schätzalgorithmus,

   Bestimmen, aus den Zeitstempeln, eines Vorwärtsverschiebungsfaktors, der die Differenz zwischen dem Intervall zwischen den Zeiten des Empfangs von aufeinanderfolgenden ersten Zeitnachrichten durch den Client und dem Intervall zwischen den Zeiten des Sendens der aufeinanderfolgenden ersten Nachrichten durch den Server ist;

   Bestimmen, aus den Zeitstempeln, eines Rückwärtsverschiebungsfaktors, der die Differenz zwischen dem Intervall zwischen den Zeiten des Empfangs von aufeinanderfolgenden zweiten Zeitnachrichten durch den Server und dem Intervall zwischen den Zeiten des Sendens der aufeinanderfolgenden zweiten Zeitnachrichten durch den Client ist;

   Aufrechterhalten einer laufenden Summe der Vorwärtsverschiebungsfaktoren über einen vorbestimmten Zeitraum;

   Aufrechterhalten einer laufenden Summe von Rückwärtsverschiebungsfaktoren über einen vorbestimmten Zeitraum; **dadurch gekennzeichnet, dass** das Verfahren ferner die folgenden Schritte umfasst:

   Bestimmen eines Rauschzustands des Vorwärtsübertragungspfads und eines Rauschzustands des Rückwärtsübertragungspfads über den vorbestimmten Zeitraum;

   wenn bestimmt ist, dass sowohl der Vorwärts- als auch der Rückwärtsübertragungspfad einen niedrigen Rauschzustand während des vorbestimmten Zeitraums aufweisen, Bestimmen eines Minimums der Summe von Vorwärtsverschiebungsfaktoren und eines Minimums der Summe von Rückwärtsverschiebungsfaktoren über diesen Zeitraum und Speichern der bestimmten Minima als Referenzminimalwerte; und

   wenn während eines zukünftigen Zeitraums bestimmt ist, dass einer aus dem Vorwärts- oder Rückwärtsübertragungspfad einen hohen Rauschzustand aufweist, während der andere Pfad einen niedrigen Rauschzustand aufweist, Verwenden der Referenzminimalwerte und des Minimums der Summe aus Verschiebungsfaktoren auf dem Pfad mit einem niedrigen Rauschzustand, um einen Minimalwert für die Summe aus Verschiebungsfaktoren auf dem Pfad mit einem hohen Rauschzustand zu schätzen.

2. Verfahren nach Anspruch 1, wobei die Warteschlangenasymmetriemessung als Folgendes bestimmt ist:

$$Q(n) = [(\hat{q}_f(n) - \hat{q}_{fmin}) - (\hat{q}_r(n) - \hat{q}_{rmin})]$$

   wobei:

   $\hat{q}_f(n)$ eine Schätzung einer Warteschlangenverzögerung ist, die von der n-ten ersten Zeitnachricht erfahren wird;
   $\hat{q}_r(n)$ eine Schätzung einer Warteschlangenverzögerung ist, die von der n-ten zweiten Zeitnachricht erfahren wird;
   $\hat{q}_{fmin}$ der bestimmte Minimalwert von $\hat{q}_f(n)$ in dem Fenster ist; und
   $\hat{q}_{rmin}$ der bestimmte Minimalwert von $\hat{q}_r(n)$ in dem Fenster ist.

**3.** Verfahren nach Anspruch 1 oder Anspruch 2, wobei der Schritt des Bestimmens der Warteschlangenasymmetriemessung Folgendes beinhaltet:
Berechnen der Warteschlangenasymmetriemessung aus den laufenden Summen.

**4.** Verfahren nach einem der Ansprüche 1 bis 3, wobei der Schätzalgorithmus ein Kalman-Filter ist, der die Messgleichung verwendet:

$$\left(T_1(n) - T_2(n)\right) + \left(T_4(n) - T_3(n)\right) + Q(n) = 2\theta_E(n) + v_n$$

wobei:

$T_1(n)$ der Zeitstempel ist, der durch den Server beim Senden einer n-ten ersten Zeitnachricht von dem Server an den Client aufgezeichnet wird;
$T_2(n)$ die Zeit des Empfangs ist, aufgezeichnet durch den Client beim Empfang der $n$-ten ersten Zeitnachricht;
$T_3(n)$ der Zeitstempel ist, aufgezeichnet durch den Client beim Senden einer n-ten zweiten Zeitnachricht von dem Client an den Server;
$T_4(n)$ die Zeit des Empfangs ist, aufgezeichnet durch den Server beim Empfang der $n$-ten zweiten Zeitnachricht;
$Q(n)$ die Warteschlangenasymmetriemessung ist;
$v_n$ das Messrauschen ist; und
$\theta_E(n)$ eine Schätzung des lokalen Uhren-Offsets ist.

**5.** Verfahren nach einem der Ansprüche 1-4, wobei der Schritt des Bestimmens eines Rauschzustands auf einem Übertragungspfad Folgendes beinhaltet:

Berechnen, basierend auf den Zeitstempeln, einer Varianz einer Warteschlangenverzögerung auf diesem Pfad;
Anwenden eines ersten gleitenden Durchschnitts mit einer ersten Zeitkonstante zur Varianz;
Anwenden eines zweiten gleitenden Durchschnitts mit einer zweiten Zeitkonstante, die größer als die erste Zeitkonstante zur Varianz ist;
Berechnen einer Differenz zwischen dem ersten und zweiten gleitenden Durchschnitt; und
Vergleichen der berechneten Differenz mit einem vorbestimmten Schwellenwert, um einen Rauschzustand auf dem Pfad zu bestimmen.

**6.** Verfahren nach einem der Ansprüche 1-4, wobei der Schritt des Bestimmens eines Rauschzustands auf einem Übertragungspfad Folgendes beinhaltet:

Bestimmen der Fehlervarianz-Kovarianz-Matrix

$$P = \begin{matrix} P_{11} & P_{12} \\ P_{21} & P_{22} \end{matrix}$$

aus einem Kalman-Filter, der in dem Schätzalgorithmus verwendet wird,
wobei $P_{11}$ die Fehlervarianz der Phasenverschiebung ist, $P_{22}$ die Fehlervarianz des Versatzes (fraktionelles Frequenz-Offset) ist, und $P_{12}$ und $P_{21}$ die Fehlerkovarianz zwischen der Phasenverschiebung und dem Versatz darstellen.

**7.** Zeit-Client (3) mit einer lokalen Uhr (5) und einem Prozessor und verbunden über ein Netzwerk (2) mit einem Zeitserver (1) mit einer Hauptuhr (4), wobei der Zeit-Client für Folgendes angeordnet ist:

Empfangen von ersten Zeitnachrichten in einer Vorwärtsrichtung von dem Zeitserver (1) an den Zeit-Client (3); und zweiten Zeitnachrichten in einer Rückwärtsrichtung von dem Zeit-Client (3) an den Zeitserver (1),
Aufzeichnen von Zeitstempeln, die die Zeiten des Sendens und die Zeiten des Empfangs der Zeitnachrichten durch den Zeit-Client sind, und
Empfangen von Zeitstempeln, die die Zeiten des Sendens und die Zeiten des Empfangs der Zeitnachrichten durch den Zeitserver sind,
wobei der Prozessor für Folgendes angeordnet ist:

Schätzen, für jede Nachricht in einem Fenster von vorbestimmter Länge, der Übertragungsverzögerung, die von der Nachricht erfahren wird;

Bestimmen, aus den Schätzungen, einer minimalen geschätzten Verzögerung, die von Zeitnachrichten in der Vorwärtsrichtung in diesem Fenster erfahren wird, und einer minimalen geschätzten Verzögerung, die von Zeitnachrichten in der Rückwärtsrichtung in diesem Fenster erfahren wird;

Bestimmen, für jede Nachricht in diesem Fenster, der Differenz zwischen der geschätzten Übertragungsverzögerung für diese Nachricht und der minimalen geschätzten Verzögerung für Nachrichten, die sich in die gleiche Richtung wie diese Nachricht bewegen;

Bestimmen, aus den Differenzen, einer Warteschlangenasymmetriemessung für jeden Austausch von ersten und zweiten Zeitnachrichten in diesem Fenster;

Schätzen der Phasenverschiebung der lokalen Uhr zu einer Zeit in diesem Fenster unter Verwendung der Zeitstempel und der Warteschlangenasymmetriemessung als Eingaben an einen Schätzalgorithmus,

Bestimmen, aus den Zeitstempeln, eines Vorwärtsverschiebungsfaktors, der die Differenz zwischen dem Intervall zwischen den Zeiten des Empfangs von aufeinanderfolgenden ersten Zeitnachrichten durch den Client und dem Intervall zwischen den Zeiten des Sendens der aufeinanderfolgenden ersten Nachrichten durch den Server ist;

Bestimmen, aus den Zeitstempeln, eines Rückwärtsverschiebungsfaktors, der die Differenz zwischen dem Intervall zwischen den Zeiten des Empfangs von aufeinanderfolgenden zweiten Zeitnachrichten durch den Server und dem Intervall zwischen den Zeiten des Sendens der aufeinanderfolgenden zweiten Zeitnachrichten durch den Client ist;

Aufrechterhalten einer laufenden Summe der Vorwärtsverschiebungsfaktoren über einen vorbestimmten Zeitraum;

Aufrechterhalten einer laufenden Summe von Rückwärtsverschiebungsfaktoren über einen vorbestimmten Zeitraum; **dadurch gekennzeichnet, dass** der Prozessor ferner für Folgendes angeordnet ist:

Bestimmen eines Rauschzustands des Vorwärtsübertragungspfads und eines Rauschzustands des Rückwärtsübertragungspfads über den vorbestimmten Zeitraum;

wenn bestimmt ist, dass sowohl der Vorwärts- als auch der Rückwärtsübertragungspfad einen niedrigen Rauschzustand während des vorbestimmten Zeitraums aufweisen, Bestimmen eines Minimums der Summe von Vorwärtsverschiebungsfaktoren und eines Minimums der Summe von Rückwärtsverschiebungsfaktoren über diesen Zeitraum und Speichern der bestimmten Minima als Referenzminimalwerte; und

wenn während eines zukünftigen Zeitraums bestimmt ist, dass einer aus dem Vorwärts- oder Rückwärtsübertragungspfad einen hohen Rauschzustand aufweist, während der andere Pfad einen niedrigen Rauschzustand aufweist, Verwenden der Referenzminimalwerte und des Minimums der Summe aus Verschiebungsfaktoren auf dem Pfad mit einem niedrigen Rauschzustand, um einen Minimalwert für die Summe aus Verschiebungsfaktoren auf dem Pfad mit einem hohen Rauschzustand zu schätzen.

8. Zeit-Client nach Anspruch 7, wobei der Prozessor die Warteschlangenasymmetriemessung als Folgendes bestimmt:

$$Q(n) = [(\hat{q}_f(n) - \hat{q}_{fmin}) - (\hat{q}_r(n) - \hat{q}_{rmin})]$$

wobei:

$\hat{q}_f(n)$ eine Schätzung einer Warteschlangenverzögerung ist, die von der n-ten ersten Zeitnachricht erfahren wird;

$\hat{q}_r(n)$ eine Schätzung einer Warteschlangenverzögerung ist, die von der n-ten zweiten Zeitnachricht erfahren wird;

$\hat{q}_{fmin}$ der bestimmte Minimalwert von $\hat{q}_f(n)$ in dem Fenster ist; und

$\hat{q}_{rmin}$ der bestimmte Minimalwert von $\hat{q}_r(n)$ in dem Fenster ist.

9. Zeit-Client (3) nach Anspruch 7 oder Anspruch 8, wobei der Prozessor angeordnet ist, um die Warteschlangenasymmetriemessung durch Folgendes zu bestimmen:
Berechnen der Warteschlangenasymmetriemessung aus den laufenden Summen.

10. Zeit-Client (3) nach einem der Ansprüche 7 bis 9, wobei der Schätzalgorithmus, der durch den Prozessor verwendet wird, ein Kalman-Filter ist, der die Messgleichung verwendet:

$$\left(T_1(n) - T_2(n)\right) + \left(T_4(n) - T_3(n)\right) + Q(n) = 2\theta_E(n) + v_n$$

wobei:

$T_1(n)$ der Zeitstempel ist, der durch den Server beim Senden einer n-ten ersten Zeitnachricht von dem Server an den Client aufgezeichnet wird;

$T_2(n)$ die Zeit des Empfangs ist, aufgezeichnet durch den Client beim Empfang der *n*-ten ersten Zeitnachricht;

$T_3(n)$ der Zeitstempel ist, aufgezeichnet durch den Client beim Senden einer n-ten zweiten Zeitnachricht von dem Client an den Server;

$T_4(n)$ die Zeit des Empfangs ist, aufgezeichnet durch den Server beim Empfang der *n*-ten zweiten Zeitnachricht;

$Q(n)$ die Warteschlangenasymmetriemessung ist;

$v_n$ das Messrauschen ist; und

$\theta_E(n)$ eine Schätzung des lokalen Uhren-Offsets ist.

11. Zeit-Client (3) nach einem der Ansprüche 7-10, wobei der Prozessor angeordnet ist, um einen Rauschzustand auf einem Übertragungspfad durch Folgendes zu bestimmen:

Berechnen, basierend auf den Zeitstempeln, einer Varianz einer Warteschlangenverzögerung auf diesem Pfad;

Anwenden eines ersten gleitenden Durchschnitts mit einer ersten Zeitkonstante zur Varianz;

Anwenden eines zweiten gleitenden Durchschnitts mit einer zweiten Zeitkonstante, die größer als die erste Zeitkonstante zur Varianz ist;

Berechnen einer Differenz zwischen dem ersten und zweiten gleitenden Durchschnitt; und

Vergleichen der berechneten Differenz mit einem vorbestimmten Schwellenwert, um einen Rauschzustand auf dem Pfad zu bestimmen.

12. Zeit-Client (3) nach einem der Ansprüche 7-10, wobei der Prozessor angeordnet ist, um einen Rauschzustand auf einem Übertragungspfad durch Folgendes zu bestimmen:

Bestimmen der Fehlervarianz-Kovarianz-Matrix

$$P = \begin{matrix} P_{11} & P_{12} \\ P_{21} & P_{22} \end{matrix}$$

aus einem Kalman-Filter, der in dem Schätzalgorithmus verwendet wird,

wobei $P_{11}$ die Fehlervarianz der Phasenverschiebung ist, $P_{22}$ die Fehlervarianz des Versatzes (fraktionelles Frequenz-Offset) ist, und $P_{12}$ und $P_{21}$ die Fehlerkovarianz zwischen der Phasenverschiebung und dem Versatz darstellen.

13. Vernetztes Zeitsystem mit Folgendem:

einem Zeitserver (1) mit einer Hauptuhr (4);

einem Zeit-Client (3) mit einer lokalen Uhr (5) und einem Prozessor und

einem Netzwerk (2), das den Zeitserver und den Zeit-Client verbindet,

wobei der Zeitserver (1) für Folgendes angeordnet ist:

Senden von ersten Zeitnachrichten in eine Vorwärtsrichtung an den Zeit-Client (3) und Empfangen von zweiten Zeitnachrichten, die in eine Rückwärtsrichtung von dem Zeit-Client gesendet werden,

Aufzeichnen von Zeitstempeln, die die Zeiten des Sendens und die Zeiten des Empfangs der Zeitnachrichten durch den Zeitserver sind, und

Senden von Zeitstempeln an den Zeit-Client,

wobei der Zeit-Client (3) für Folgendes angeordnet ist:

Empfangen der ersten Zeitnachrichten; und Senden der zweiten Zeitnachrichten an den Zeitserver (1),

Aufzeichnen von Zeitstempeln, die die Zeiten des Sendens und die Zeiten des Empfangs der Zeitnachrichten durch den Zeit-Client sind, und

Empfangen von Zeitstempeln, die die Zeiten des Sendens und die Zeiten des Empfangs der Zeitnachrichten durch den Zeitserver sind,

wobei der Prozessor für Folgendes angeordnet ist:

Schätzen, für jede Nachricht in einem Fenster von vorbestimmter Länge, der Übertragungsverzögerung, die von der Nachricht erfahren wird;

Bestimmen, aus den Schätzungen, einer minimalen geschätzten Verzögerung, die von Zeitnachrichten in der Vorwärtsrichtung in diesem Fenster erfahren wird, und einer minimalen geschätzten Verzögerung, die von Zeitnachrichten in der Rückwärtsrichtung in diesem Fenster erfahren wird;

Bestimmen, für jede Nachricht in diesem Fenster, der Differenz zwischen der geschätzten Übertragungsverzögerung für diese Nachricht und der minimalen geschätzten Verzögerung für Nachrichten, die sich in die gleiche Richtung wie diese Nachricht bewegen;

Bestimmen, aus den Differenzen, einer Warteschlangenasymmetriemessung für jeden Austausch von ersten und zweiten Zeitnachrichten in diesem Fenster;

Schätzen der Phasenverschiebung der lokalen Uhr (5) zu einer Zeit in diesem Fenster unter Verwendung der Zeitstempel und der Warteschlangenasymmetriemessung als Eingaben an einen Schätzalgorithmus,

Bestimmen, aus den Zeitstempeln, eines Vorwärtsverschiebungsfaktors, der die Differenz zwischen dem Intervall zwischen den Zeiten des Empfangs von aufeinanderfolgenden ersten Zeitnachrichten durch den Client und dem Intervall zwischen den Zeiten des Sendens der aufeinanderfolgenden ersten Nachrichten durch den Server ist;

Bestimmen, aus den Zeitstempeln, eines Rückwärtsverschiebungsfaktors, der die Differenz zwischen dem Intervall zwischen den Zeiten des Empfangs von aufeinanderfolgenden zweiten Zeitnachrichten durch den Server und dem Intervall zwischen den Zeiten des Sendens der aufeinanderfolgenden zweiten Zeitnachrichten durch den Client ist;

Aufrechterhalten einer laufenden Summe der Vorwärtsverschiebungsfaktoren über einen vorbestimmten Zeitraum;

Aufrechterhalten einer laufenden Summe von Rückwärtsverschiebungsfaktoren über einen vorbestimmten Zeitraum; **dadurch gekennzeichnet, dass** der Prozessor ferner für Folgendes angeordnet ist:

Bestimmen eines Rauschzustands des Vorwärtsübertragungspfads und eines Rauschzustands des Rückwärtsübertragungspfads über den vorbestimmten Zeitraum;

wenn bestimmt ist, dass sowohl der Vorwärts- als auch der Rückwärtsübertragungspfad einen niedrigen Rauschzustand während des vorbestimmten Zeitraums aufweisen, Bestimmen eines Minimums der Summe von Vorwärtsverschiebungsfaktoren und eines Minimums der Summe von Rückwärtsverschiebungsfaktoren über diesen Zeitraum und Speichern der bestimmten Minima als Referenzminimalwerte; und

wenn während eines zukünftigen Zeitraums bestimmt ist, dass einer aus dem Vorwärts- oder Rückwärtsübertragungspfad einen hohen Rauschzustand aufweist, während der andere Pfad einen niedrigen Rauschzustand aufweist, Verwenden der Referenzminimalwerte und des Minimums der Summe aus Verschiebungsfaktoren auf dem Pfad mit einem niedrigen Rauschzustand, um einen Minimalwert für die Summe aus Verschiebungsfaktoren auf dem Pfad mit einem hohen Rauschzustand zu schätzen.

## Revendications

1. Procédé d'estimation d'un décalage de phase d'une horloge locale (5) d'un client de temps (3) comparée à une horloge maîtresse (4) d'un serveur de temps (1) connecté au client de temps par l'intermédiaire d'un réseau (2), le procédé incluant les étapes de :

l'envoi de premiers messages de synchronisation dans un sens direct depuis le serveur de temps (1) au client de temps (3) et de seconds messages de synchronisation dans un sens inverse depuis le client de temps au serveur de temps, et l'enregistrement d'estampilles de temps qui sont les temps de l'envoi et les temps de la réception des messages de synchronisation ;

l'estimation, pour chaque message dans une fenêtre de longueur prédéterminée, du retard de transmission subi par le message ;

la détermination, à partir desdites estimations, d'un retard estimé minimum subi par des messages de synchronisation dans le sens direct dans cette fenêtre, et d'un retard estimé minimum subi par des messages de synchronisation dans le sens inverse dans cette fenêtre ;

la détermination, pour chaque message dans cette fenêtre, de la différence entre le retard de transmission estimé pour ce message et le retard estimé minimum pour des messages en mouvement dans le même sens que ce message ;

la détermination, à partir desdites différences, d'une mesure d'asymétrie de mise en file d'attente pour chaque échange de premiers et de seconds messages de synchronisation dans cette fenêtre ;

l'estimation du décalage de phase de l'horloge locale (5) à un temps dans ladite fenêtre en utilisant lesdites estampilles de temps et ladite mesure d'asymétrie de mise en file d'attente en tant qu'entrées dans un algorithme d'estimation,

la détermination, à partir desdites estampilles de temps, d'un facteur de déplacement en sens direct qui est la différence entre l'intervalle entre les temps de la réception de premiers messages de synchronisation successifs par le client et l'intervalle entre les temps de l'envoi desdits premiers messages successifs par le serveur ;

la détermination, à partir desdites estampilles de temps, d'un facteur de déplacement en sens inverse qui est la différence entre l'intervalle entre les temps de la réception de seconds messages de synchronisation successifs par le serveur et l'intervalle entre les temps de l'envoi desdits seconds messages de synchronisation successifs par le client ;

le maintien d'une somme cumulative desdits facteurs de déplacement en sens direct au cours d'un laps de temps prédéterminé ;

le maintien d'une somme cumulative de facteurs de déplacement en sens inverse au cours d'un laps de temps prédéterminé ; **caractérisé en ce que** le procédé comprend en outre les étapes de :

la détermination d'une condition de bruit du chemin de transmission en sens avant et une condition de bruit du chemin de transmission en sens inverse durant ledit laps de temps prédéterminé ;

s'il est déterminé que les chemins de transmission en sens avant et en sens inverse ont tous les deux une condition de bruit faible durant ledit laps de temps prédéterminé, la détermination d'un minimum de la somme de facteurs de déplacement en sens direct et d'un minimum de la somme de facteurs de déplacement en sens inverse au cours de ce laps de temps et le stockage des minima déterminés en tant que valeurs minimums de référence ; et

s'il est déterminé, durant un lapse de temps futur, qui un des chemins de transmission en sens avant ou en sens inverse a une condition de bruit élevé, alors que l'autre chemin a une condition de bruit faible, en utilisant lesdites valeurs minimums de référence et le minimum de la somme de facteurs de déplacement sur le chemin avec une condition de bruit faible pour estimer une valeur minimum pour la somme de facteurs de déplacement sur le chemin avec une condition de bruit élevé.

2. Procédé selon la revendication 1, dans lequel la mesure d'asymétrie de mise en file d'attente est déterminée par :

$$Q(n) \;=\; \left[ (\hat{q}_f(n) - \hat{q}_{fmin}) - (\hat{q}_r(n) - \hat{q}_{rmin}) \right]$$

dans lequel :

$\hat{q}_f(n)$ est une estimation d'un retard de mise en file d'attente subi par le n-ième premier message de synchronisation ;

$\hat{q}_r(n)$ est une estimation d'un retard de mise en file d'attente subi par le n-ième second message de synchronisation ;

$\hat{q}_{fmin}$ est la valeur minimum déterminée de $\hat{q}_f(n)$ dans ladite fenêtre ; et

$\hat{q}_{rmin}$ est la valeur minimum déterminée de $\hat{q}_r(n)$ dans ladite fenêtre.

3. Procédé selon la revendication 1 ou la revendication 2, dans lequel l'étape de la détermination de la mesure d'asymétrie de mise en file d'attente inclut :

le calcul de la mesure d'asymétrie de mise en file d'attente à partir desdites sommes cumulatives.

4. Procédé selon l'une quelconque des revendications 1 à 3, dans lequel l'algorithme d'estimation est un filtre de Kalman qui utilise l'estimation de mesure :

$$(T_1(n) - T_2(n)) + (T_4(n) - T_3(n)) + Q(n) \;=\; 2\theta_E(n) + v_n$$

dans lequel :

$T_1(n)$ est l'estampille de temps enregistrée par le serveur lors de l'envoi d'un n-ième premier message de synchronisation depuis le serveur au client ;

$T_2(n)$ est le temps de réception tel qu'enregistré par le client lors de la réception du n-ième premier message de synchronisation ;

$T_3(n)$ est l'estampille de temps enregistrée par le client lors de l'envoi d'un $n$-ième second message de synchronisation depuis le client au serveur ;

$T_4(n)$ est le temps de réception tel qu'enregistré par le serveur lors de la réception du n-ième second message de synchronisation ;

Q(n) est la mesure d'asymétrie de mise en file d'attente ;

$v_n$ est le bruit de mesure ; et

$\theta_E(n)$ est une estimation du décalage d'horloge locale.

5. Procédé selon l'une quelconque des revendications 1 à 4, dans lequel l'étape de la détermination d'une condition de bruit sur un chemin de transmission implique :

le calcul, sur la base des estampilles de temps, d'une variance d'un retard de mise en file d'attente sur ce chemin ;

l'application d'une première moyenne mobile, ayant une première constante de temps, à la variance ;

l'application d'une seconde moyenne mobile, ayant une seconde constante de temps supérieure à la première constante de temps, à la variance ;

le calcul d'une différence entre les première et seconde moyennes mobiles ; et

la comparaison de la différence calculée à un seuil prédéterminé pour déterminer une condition de bruit sur le chemin.

6. Procédé selon l'une quelconque des revendications 1 à 4 dans lequel l'étape de la détermination d'une condition de bruit sur un chemin de transmission implique :

la détermination de la matrice variance-covariance d'erreur

$$P = \begin{matrix} P_{11} & P_{12} \\ P_{21} & P_{22} \end{matrix}$$

à partir d'un filtre de Kalman qui est utilisé dans ledit algorithme d'estimation,

où $P_{11}$ est la variance d'erreur du décalage de phase, $P_{22}$ est la variance d'erreur du biais (décalage de fréquence fractionnelle), et $P_{12}$ et $P_{21}$ représentent la covariance d'erreur entre le décalage de phase et le biais.

7. Client de temps (3) ayant une horloge locale (5) et un processeur, et connecté par l'intermédiaire d'un réseau (2) à un serveur de temps (1) ayant une horloge maîtresse (4), dans lequel le client de temps est agencé pour :

recevoir des premiers messages de synchronisation envoyés dans un sens direct depuis le serveur de temps (1) au client de temps (3) ; et envoyer des seconds messages de synchronisation dans un sens inverse depuis le client de temps (3) au serveur de temps (1),

enregistrer des estampilles de temps qui sont les temps de l'envoi et les temps de la réception des messages de synchronisation par le client de temps ; et

recevoir des estampilles de temps qui sont les temps de l'envoi et les temps de la réception des messages de synchronisation par le serveur de temps,

dans lequel le processeur est agencé pour :

estimer, pour chaque message dans une fenêtre de longueur prédéterminée, le retard de transmission subi par le message ;

déterminer, à partir desdites estimations, un retard estimé minimum subi par des messages de synchronisation dans le sens direct dans cette fenêtre, et un retard estimé minimum subi par des messages de synchronisation dans le sens inverse dans cette fenêtre ;

déterminer, pour chaque message dans cette fenêtre, la différence entre le retard de transmission estimé pour ce message et le retard estimé minimum pour des messages en mouvement dans le même sens que ce message ;

déterminer, à partir desdites différences, une mesure d'asymétrie de mise en file d'attente pour chaque échange de premiers et de seconds messages de synchronisation dans cette fenêtre ;

estimer le décalage de phase de l'horloge locale à un temps dans ladite fenêtre en utilisant lesdites estampilles de temps et ladite mesure d'asymétrie de mise en file d'attente en tant qu'entrées dans un algorithme d'estimation,

déterminer, à partir desdites estampilles de temps, un facteur de déplacement en sens direct qui est la différence entre l'intervalle entre les temps de la réception de premiers messages de synchronisation successifs par le client et l'intervalle entre les temps de l'envoi desdits premiers messages successifs par le serveur ;

déterminer, à partir desdites estampilles de temps, un facteur de déplacement en sens inverse qui est la différence entre l'intervalle entre les temps de la réception de seconds messages de synchronisation successifs par le serveur et l'intervalle entre les temps de l'envoi desdits seconds messages de synchronisation successifs par le client ;

maintenir une somme cumulative desdits facteurs de déplacement en sens direct au cours d'un laps de temps prédéterminé ;

maintenir une somme cumulative de facteurs de déplacement en sens inverse au cours d'un laps de temps prédéterminé ; **caractérisé en ce que** le processeur est en outre agencé pour :

déterminer une condition de bruit du chemin de transmission en sens avant et une condition de bruit du chemin de transmission en sens inverse durant ledit laps de temps prédéterminé ;

s'il est déterminé que les chemins de transmission en sens avant et en sens inverse ont tous les deux une condition de bruit faible durant ledit laps de temps prédéterminé, déterminer un minimum de la somme de facteurs de déplacement en sens direct et un minimum de la somme de facteurs de déplacement en sens inverse au cours de ce laps de temps et stocker les minima déterminés en tant que valeurs minimums de référence ; et

s'il est déterminé, durant un lapse de temps futur, qu'un des chemins de transmission en sens avant ou en sens inverse a une condition de bruit élevé, alors que l'autre chemin a une condition de bruit faible, utiliser lesdites valeurs minimums de référence et le minimum de la somme de facteurs de déplacement sur le chemin avec une condition de bruit faible pour estimer une valeur minimum pour la somme de facteurs de déplacement sur le chemin avec une condition de bruit élevé.

8. Client de temps selon la revendication 7, dans lequel le processeur détermine la mesure d'asymétrie de mise en file d'attente par :

$$Q(n) \; = \; \left[\left(\hat{q}_f(n) \; - \; \hat{q}_{fmin}\right) - \; \left(\hat{q}_r(n) \; - \; \hat{q}_{rmin}\right)\right]$$

dans lequel :

$\hat{q}_f(n)$ est une estimation d'un retard de mise en file d'attente subi par le n-ième premier message de synchronisation ;

$\hat{q}_r(n)$ est une estimation d'un retard de mise en file d'attente subi par le n-ième second message de synchronisation ;

$\hat{q}_{fmin}$ est la valeur minimum déterminée de $\hat{q}_f(n)$ dans ladite fenêtre ; et

$\hat{q}_{rmin}$ est la valeur minimum déterminée de $\hat{q}_r(n)$ dans ladite fenêtre.

9. Client de temps (3) selon la revendication 7 ou la revendication 8, dans lequel le processeur est agencé pour déterminer la mesure d'asymétrie de mise en file d'attente par :
le calcul de la mesure d'asymétrie de mise en file d'attente à partir desdites sommes cumulatives.

10. Client de temps (3) selon l'une quelconque des revendications 7 à 9, dans lequel l'algorithme d'estimation utilisé par le processeur est un filtre de Kalman qui utilise l'estimation de mesure :

$$(T_1(n) \; - \; T_2(n)) \; + \; (T_4(n) - T_3(n)) \; + \; Q(n) \; = \; 2\theta_E(n) \; + \; v_n$$

dans lequel :

$T_1(n)$ est l'estampille de temps enregistrée par le serveur lors de l'envoi d'un n-ième premier message de synchronisation depuis le serveur au client ;

$T_2(n)$ est le temps de réception tel qu'enregistré par le client lors de la réception du n-ième premier message de synchronisation ;

$T_3(n)$ est l'estampille de temps enregistrée par le client lors de l'envoi d'un *n*-ième second message de synchronisation depuis le client au serveur ;

$T_4(n)$ est le temps de réception tel qu'enregistré par le serveur lors de la réception du n-ième second message de synchronisation ;

Q(n) est la mesure d'asymétrie de mise en file d'attente ;

$v_n$ est le bruit de mesure ; et

$\theta_E(n)$ est une estimation du décalage d'horloge locale.

**11.** Client de temps (3) selon l'une quelconque des revendications 7 à 10, dans lequel le processeur est agencé pour déterminer une condition de bruit sur un chemin de transmission par l'intermédiaire de :

le calcul, sur la base des estampilles de temps, d'une variance d'un retard de mise en file d'attente sur ce chemin ;
l'application d'une première moyenne mobile, ayant une première constante de temps, à la variance ;
l'application d'une seconde moyenne mobile, ayant une seconde constante de temps supérieure à la première constante de temps, à la variance ;
le calcul d'une différence entre les première et seconde moyennes mobiles ; et
la comparaison de la différence calculée à un seuil prédéterminé pour déterminer une condition de bruit sur le chemin.

**12.** Client de temps (3) selon l'une quelconque des revendications 7 à 10, dans lequel le processeur est agencé pour déterminer une condition de bruit sur un chemin de transmission par l'intermédiaire de :

la détermination de la matrice variance-covariance d'erreur

$$ P = \begin{matrix} P_{11} & P_{12} \\ P_{21} & P_{22} \end{matrix} $$

à partir d'un filtre de Kalman qui est utilisé dans ledit algorithme d'estimation,
où $P_{11}$ est la variance d'erreur du décalage de phase, $P_{22}$ est la variance d'erreur du biais (décalage de fréquence fractionnelle), et $P_{12}$ et $P_{21}$ représentent la covariance d'erreur entre le décalage de phase et le biais.

**13.** Système de temps mis en réseau, ayant :

un serveur de temps (1) ayant une horloge maîtresse (4) ;
un client de temps (3) ayant une horloge locale (5) et un processeur, et
un réseau (2) connectant le serveur de temps et le client de temps,
dans lequel le serveur de temps (1) est agencé pour :

envoyer des premiers messages de synchronisation dans un sens direct au client de temps (3), et recevoir des seconds messages de synchronisation envoyés dans un sens inverse depuis le client de temps,
enregistrer des estampilles de temps qui sont les temps de l'envoi et les temps de la réception des messages de synchronisation par le serveur de temps, et
envoyer lesdites estampilles de temps au client de temps,
dans lequel le client de temps (3) est agencé pour :

recevoir lesdits premiers messages de synchronisation ; et envoyer lesdits seconds messages de synchronisation au serveur de temps (1),
enregistrer des estampilles de temps qui sont les temps de l'envoi et les temps de la réception des messages de synchronisation par le client de temps ; et
recevoir des estampilles de temps qui sont les temps de l'envoi et les temps de la réception des messages de synchronisation par le serveur de temps,
dans lequel le processeur est agencé pour :

estimer, pour chaque message dans une fenêtre de longueur prédéterminée, le retard de transmission subi par le message ;

déterminer, à partir desdites estimations, un retard estimé minimum subi par des messages de synchronisation dans le sens direct dans cette fenêtre, et un retard estimé minimum subi par des messages de synchronisation dans le sens inverse dans cette fenêtre ;

déterminer, pour chaque message dans cette fenêtre, la différence entre le retard de transmission estimé pour ce message et le retard estimé minimum pour des messages en mouvement dans le même sens que ce message ;

déterminer, à partir desdites différences, une mesure d'asymétrie de mise en file d'attente pour chaque échange de premiers et de seconds messages de synchronisation dans cette fenêtre ;

estimer le décalage de phase de l'horloge locale (5) à un temps dans ladite fenêtre en utilisant lesdites estampilles de temps et ladite mesure d'asymétrie de mise en file d'attente en tant qu'entrées dans un algorithme d'estimation,

déterminer, à partir desdites estampilles de temps, un facteur de déplacement en sens direct qui est la différence entre l'intervalle entre les temps de la réception de premiers messages de synchronisation successifs par le client et l'intervalle entre les temps de l'envoi desdits premiers messages successifs par le serveur ;

déterminer, à partir desdites estampilles de temps, un facteur de déplacement en sens inverse qui est la différence entre l'intervalle entre les temps de la réception de seconds messages de synchronisation successifs par le serveur et l'intervalle entre les temps de **l'envoi** desdits seconds messages de synchronisation successifs par le client ;

maintenir une somme cumulative desdits facteurs de déplacement en sens direct au cours d'un laps de temps prédéterminé ;

maintenir une somme cumulative de facteurs de déplacement en sens inverse au cours d'un laps de temps prédéterminé ; **caractérisé en ce que** le processeur est en outre agencé pour :

déterminer une condition de bruit du chemin de transmission en sens avant et une condition de bruit du chemin de transmission en sens inverse durant ledit laps de temps prédéterminé ;

s'il est déterminé que les chemins de transmission en sens avant et en sens inverse ont tous les deux une condition de bruit faible durant ledit laps de temps prédéterminé, déterminer un minimum de la somme de facteurs de déplacement en sens direct et un minimum de la somme de facteurs de déplacement en sens inverse au cours de ce laps de temps et stocker les minima déterminés en tant que valeurs minimums de référence ; et

s'il est déterminé, durant un lapse de temps futur, qu'un des chemins de transmission en sens avant ou en sens inverse a une condition de bruit élevé, alors que l'autre chemin a une condition de bruit faible, utiliser lesdites valeurs minimums de référence et le minimum de la somme de facteurs de déplacement sur le chemin avec une condition de bruit faible pour estimer une valeur minimum pour la somme de facteurs de déplacement sur le chemin avec une condition de bruit élevé.

FIG. 1

FIG. 2

FIG. 3

FIG. 4

$T_1(n),\ T_2(n),\ T_3(n)\ ,\ T_4(n)$

Asymmetry measurement, $Q(n)$

Noise measurement $\hat{v}(n)$

Kalman
Filter

Estimated skew
$\alpha(n)$

Estimated phase offset
$\theta(n)$

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9112628 B
- US 9184861 B
- US 9184861 B2
- US 2015092794 A

**Non-patent literature cited in the description**

- **CHALOUPKA et al.** Clock Synchronization Over Communication Paths With Queue-Induced Delay Asymmetries. *IEEE Communications Letters*, 01 September 2014, vol. 18 (9), 1511-1554
- **A. BLETSAS**. Evaluation of Kalman filtering for network time keeping. *IEEE Trans. on Ultrason., Ferroel., and Freq. Control*, September 2005